(19) **Europäisches Patentamt / European Patent Office / Office européen des brevets**

(11) **EP 4 596 217 A1**

(12) **EUROPEAN PATENT APPLICATION**
published in accordance with Art. 153(4) EPC

(43) Date of publication:
06.08.2025 Bulletin 2025/32

(21) Application number: 23872096.5

(22) Date of filing: 21.09.2023

(51) International Patent Classification (IPC):
$B29C\ 64/112^{(2017.01)}$   $A23L\ 2/00^{(2006.01)}$
$A23L\ 2/58^{(2006.01)}$   $B29C\ 64/209^{(2017.01)}$
$B33Y\ 10/00^{(2015.01)}$   $B33Y\ 30/00^{(2015.01)}$
$B33Y\ 50/02^{(2015.01)}$

(52) Cooperative Patent Classification (CPC):
A23L 2/00; A23L 2/58; B29C 64/112; B29C 64/209;
B33Y 10/00; B33Y 30/00; B33Y 50/02

(86) International application number:
PCT/JP2023/034186

(87) International publication number:
WO 2024/070869 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 JP 2022156920

(71) Applicant: Suntory Holdings Limited
Osaka-shi, Osaka 530-8203 (JP)

(72) Inventors:
• INOUE, Ippei
Soraku-gun, Kyoto 619-0284 (JP)
• SUETSUGU, Daichi
Tokyo 135-0064 (JP)
• KUDO, Takahiro
Tokyo 135-0064 (JP)

(74) Representative: Vossius & Partner
Patentanwälte Rechtsanwälte mbB
Siebertstrasse 3
81675 München (DE)

(54) **METHOD FOR PRODUCING PATTERN-CONTAINING LIQUID USING POSITION-CONTROLLABLE NOZZLE**

(57) The present invention aims to provide a method for producing a pattern-containing liquid, a pattern-containing liquid, and a device for producing a pattern-containing liquid each having a high flexibility in designing a pattern in a liquid, as well as software to be operated in the device for producing a pattern-containing liquid. The present invention relates to, for example, a method for producing a pattern-containing liquid, the method including: a drawing step of drawing a representation by discharging a pattern-forming liquid material into a liquid using a position-controllable nozzle; and after drawing the representation, a removing step of removing the nozzle from the representation by moving the nozzle in a direction away from a drawing surface for the representation without discharging the liquid material through the nozzle.

FIG.1A

EP 4 596 217 A1

FIG.1B

FIG.1C

FIG.1D

2A

1

2

3A

**Description**

TECHNICAL FIELD

The present invention relates to a method for producing a pattern-containing liquid, a pattern-containing liquid, a device for producing a pattern-containing liquid, and software. The present invention specifically relates to a method for producing a pattern-containing liquid capable of forming a pattern such as a character, a picture, or uneven distribution of a component in a liquid, a pattern-containing liquid, a device for producing a pattern-containing liquid, and software.

BACKGROUND ART

3D printing is a technique of forming a 3D structure by successively depositing 2D layers of material based on 3D computer-aided design (CAD) data. This technique has been used to form 3D structures of various materials such as metallic material, polymeric material, food material, and cells.

Examples of techniques for 3D printing in a liquid phase proposed so far include: a technique of depositing a polymer material while exchanging liquid phases in accordance with the target conditions using a platform that allows for the exchange of liquid phases during printing to construct a polymer structure (e.g., see Patent Literature 1); a technique of depositing and solidifying a solidifying material in a gel to form a 3D object suspended within the gel (e.g., see Patent Literature 2); and a technique of introducing, into a first fluid, a second fluid that is immiscible with the first fluid to create a pattern in the first fluid by the use of their immiscibility with each other (e.g., see Patent Literature 3).

CITATION LIST

- Patent Literature

     Patent Literature 1: US 2020/247053 A1
     Patent Literature 2: US 2018/281295 A1
     Patent Literature 3: WO 2018/218264

SUMMARY OF INVENTION

- Technical Problem

In formation of a pattern with a fluid in a liquid, the discharged fluid is not fixed, so that flows generated by contact with a nozzle or movement of the nozzle change the pattern of the fluid, causing a failure in target drawing.

A technique of depositing a polymer material on the bottom of a container containing a fluid, as disclosed in Patent Literature 1, is based on cross-linking of the discharged material. Although the literature takes into consideration disruption of the formed pattern due to direct contact between the pattern and a nozzle, it fails to examine nozzle movement that does not change the formed pattern by the flow of a liquid.

The techniques disclosed in Patent Literature 2 and Patent Literature 3 can create a 3D pattern floating in a gel or fluid without contacting the bottom or wall of a container containing the gel or fluid.

However, the technique of Patent Literature 2 is also based on cross-linking of the discharged material for pattern formation as in Patent Literature 1. Although the literature takes into consideration disruption of the formed pattern due to direct contact between the pattern and a nozzle, it fails to examine nozzle movement that does not change the formed pattern by the flow of a liquid.

In the technique of Patent Literature 3, a fluid is discharged into a liquid immiscible with the fluid due to their hydrophilicity to form droplets, thereby forming a pattern. In order to form droplets in a liquid having different hydrophilicity, the literature examines rapid movement of a nozzle. However, this technique is not able to draw a continuous line in principle. Thus, the literature does not examine a failure in target drawing due to a change in the pattern caused by a flow generated by movement of a nozzle. Accordingly, rapid nozzle movement for droplet formation generates a flow to prevent formation of a fine pattern.

Problems similar to the above may occur not only in the cases of forming a 3D pattern in a liquid but also in the cases of forming a 1D or 2D pattern in a liquid.

The present invention aims to provide a method for producing a pattern-containing liquid, a pattern-containing liquid, and a device for producing a pattern-containing liquid each having a high flexibility in designing a pattern in a liquid, as well as software to be operated in the device for producing a pattern-containing liquid.

- Solution to Problem

To achieve such a pattern-containing liquid, the present inventors focused on nozzle movement that, without interfering the fluid that has already been discharged in a liquid, enables discharge of a fresh fluid and drawing a pattern.

The present inventors then found that forming a certain pattern and moving the nozzle in a direction not parallel but perpendicular to a drawing surface for the resulting pattern to remove the nozzle can maintain the shape of the pattern. The present inventors also found that removing the nozzle to a gaseous phase can maintain the shape of the pattern.

The present inventors also found that drawing a pattern with the nozzle remaining at an angle of 10° or greater to a drawing surface for the pattern can form a target pattern.

The present inventors also found that drawing a pattern including crossed lines with a drawing surface where a line is drawn being apart from a drawing surface where another line is drawn (e.g., 2 mm or greater) can form a target pattern.

The present inventors also found that, in forming a filled pattern, using a nozzle to mount (stack) lines in the direction to be filled or to extend a drawn line or dot can form a pattern with a target area being filled.

The present inventors also found that using at least one of the above drawing methods to form a pattern in a liquid can improve the flexibility in design of a pattern in a liquid.

In other words, although not limited thereto, the present invention relates to a method for producing a pattern-containing liquid, a pattern-containing liquid, a device for producing a pattern-containing liquid, and software below.

[1] A method for producing a pattern-containing liquid, the method including: a drawing step of drawing a representation by discharging a pattern-forming liquid material into a liquid using a position-controllable nozzle; and after drawing the representation, a removing step of removing the nozzle from the representation by moving the nozzle in a direction away from a drawing surface for the representation without discharging the liquid material through the nozzle.

[2] The method for producing a pattern-containing liquid according to the clause [1], wherein in the removing step, the nozzle is moved in a direction forming an angle of 0° or greater and 45° or smaller to a direction perpendicular to the drawing surface for the representation.

[3] The method for producing a pattern-containing liquid according to the clause [2], wherein, in the removing step, the nozzle is moved in the perpendicular direction.

[4] The method for producing a pattern-containing liquid according to any one of the clauses [1] to [3], wherein, in the removing step, the nozzle is removed to a gaseous phase outside the liquid.

[5] A method for producing a pattern-containing liquid, the method including a drawing step of drawing a representation by discharging a pattern-forming liquid material into a liquid using a position-controllable nozzle, wherein, in the drawing step, the representation is drawn with a tip portion of the nozzle remaining at an angle of 10° or greater to a drawing surface for the representation.

[6] A method for producing a pattern-containing liquid, the method including a drawing step of drawing a representation by discharging a pattern-forming liquid material into a liquid using a position-controllable nozzle, wherein, in the drawing step, a first line is drawn and then a second line is drawn on a drawing surface apart from a drawing surface for the first line.

[7] The method for producing a pattern-containing liquid according to the clause [6], wherein the drawing surface for the first line and the drawing surface for the second line are apart from each other by a distance of 2 mm or greater.

[8] A method for producing a pattern-containing liquid, the method including a drawing step of drawing a representation by discharging a pattern-forming liquid material into a liquid using a position-controllable nozzle, wherein, in the drawing step, a plurality of parallel adjacent lines is drawn to draw a planar representation.

[9] A method for producing a pattern-containing liquid, the method including a drawing step of drawing a representation by discharging a pattern-forming liquid material into a liquid using a position-controllable nozzle, wherein, in the drawing step, a dot or a line is drawn and the liquid material defining the dot or the line is extended with the nozzle to draw a planar representation.

[10] A pattern-containing liquid containing: a liquid; and a representation in the liquid, the representation being drawn using a pattern-forming liquid material, the representation including a first line drawn on a first drawing surface and a second line drawn on a drawing surface apart from the drawing surface.

[11] The pattern-containing liquid according to the clause [10], wherein the first drawing surface and the second drawing surface are apart from each other by a distance of 2 mm or greater.

[12] A device for producing a pattern-containing liquid, the device including a controller configured to control: a position of a nozzle configured to discharge a pattern-forming liquid material; and a discharge flow rate of the liquid material discharged through the nozzle, the controller being configured to: cause the nozzle to discharge the liquid material into a liquid to draw a representation; and move the nozzle in a direction away from a drawing surface for the representation without discharging the liquid material through the nozzle to remove the nozzle from the representation.

[13] The device for producing a pattern-containing liquid according to the clause [12], wherein, in removing the nozzle from the representation, the nozzle is moved in a direction forming an angle of 0° or greater and 45° or smaller to a direction perpendicular to the drawing surface for the representation.

[14] The device for producing a pattern-containing liquid according to the clause [13], wherein, in removing the nozzle from the representation, the nozzle is moved in the perpendicular direction.

[15] The device for producing a pattern-containing liquid according to any one of the clauses [12] to [14], wherein, in removing the nozzle from the representation, the nozzle is removed to a gaseous phase outside the liquid.

[16] A device for producing a pattern-containing liquid, the device including a controller configured to control: a position of a nozzle configured to discharge a pattern-forming liquid material; and a discharge flow rate of the liquid material discharged through the nozzle, the controller being configured to cause the nozzle to discharge the liquid material into a liquid with a tip portion of the nozzle remaining at an angle of 10° or greater to the drawing surface to draw a representation.

[17] A device for producing a pattern-containing liquid, the device including a controller configured to control: a position of a nozzle configured to discharge a pattern-forming liquid material; and a discharge flow rate of the liquid material discharged through the nozzle, the controller being configured to: cause the nozzle to discharge the liquid material into a liquid to draw a first line; and cause the nozzle to discharge the liquid material into the liquid on a drawing surface apart from a drawing surface for the first line to draw a second line.

[18] The device for producing a pattern-containing liquid according to the clause [17], wherein the drawing surface for the first line and the drawing surface for the second line are apart from each other by a distance of 2 mm or greater.

[19] A device for producing a pattern-containing liquid, the device including a controller configured to control: a position of a nozzle configured to discharge a pattern-forming liquid material; and a discharge flow rate of the liquid material discharged through the nozzle, the controller being configured to cause the nozzle to discharge the liquid material into a liquid to draw a plurality of parallel adjacent lines and thereby draw a planar representation.

[20] A device for producing a pattern-containing liquid, the device including a controller configured to control: a position of a nozzle configured to discharge a pattern-forming liquid material; and a discharge flow rate of the liquid material discharged through the nozzle, the controller being configured to: cause the nozzle to discharge the liquid material into a liquid to draw a dot or a line; and move the nozzle without discharging the liquid material through the nozzle to cause the nozzle to extend the liquid material defining the dot or the line and thereby draw a planar representation.

[21] The device for producing a pattern-containing liquid according to any one of the clauses [12] to [20], further including a tank for containing the liquid material.

[22] The device for producing a pattern-containing liquid according to any one of the clauses [12] to [21], further including the nozzle.

[23] The device for producing a pattern-containing liquid according to any one of the clauses [12] to [22], further including a pump configured to deliver the liquid material to the nozzle.

[24] Software to be operated in a device for producing a pattern-containing liquid, the device including a controller configured to control: a position of a nozzle configured to discharge a pattern-forming liquid material; and a discharge flow rate of the liquid material discharged through the nozzle, the software causing the controller to execute control processing including: causing the nozzle to discharge the liquid material into a liquid to draw a representation; and moving the nozzle in a direction away from a drawing surface for the representation without discharging the liquid material through the nozzle to remove the nozzle from the representation.

[25] The software according to the clause [24], wherein the software causes the controller to execute control processing including: in removing the nozzle from the representation, causing the nozzle to move in a direction forming an angle of 0° or greater and 45° or smaller to a direction perpendicular to the drawing surface for the representation.

[26] The software according to the clause [25], wherein the software causes the controller to execute control processing including: in removing the nozzle from the representation, causing the nozzle to move in the perpendicular direction.

[27] The software according to any one of the clauses [24] to [26], wherein the software causes the controller to execute control processing including: in removing the nozzle from the representation, removing the nozzle to a gaseous phase outside the liquid.

[28] Software to be operated in a device for producing a pattern-containing liquid, the device including a controller configured to control: a position of a nozzle configured to discharge a pattern-forming liquid material; and a discharge flow rate of the liquid material discharged through the nozzle, the software causing the controller to execute control processing including: causing the nozzle to discharge the liquid material into a liquid with a tip portion of the nozzle remaining at an angle of 10° or greater to the drawing surface to draw a representation.

[29] Software to be operated in a device for producing a pattern-containing liquid, the device including a controller configured to control: a position of a nozzle configured to discharge a pattern-forming liquid material; and a discharge flow rate of the liquid material discharged through the nozzle, the software causing the controller to execute control processing including: causing the nozzle to discharge the liquid material into a liquid to draw a first line; and causing the nozzle to discharge the liquid material into the liquid on a drawing surface apart from a drawing surface for the first line to draw a second line.

[30] The software according to the clause [29], wherein the drawing surface for the first line and the drawing surface for the second line are apart from each other by a distance of 2 mm or greater.

[31] Software to be operated in a device for producing a pattern-containing liquid, the device including a controller configured to control: a position of a nozzle configured to discharge a pattern-forming liquid material; and a discharge flow rate of the liquid material discharged through the nozzle, the software causing the controller to execute control processing including: causing the nozzle to discharge the liquid material into a liquid to draw a plurality of parallel adjacent lines and thereby draw a planar representation.

[32] Software to be operated in a device for producing a pattern-containing liquid, the device including a controller configured to control: a position of a nozzle configured to discharge a pattern-forming liquid material; and a discharge flow rate of the liquid material discharged through the nozzle, the software causing the controller to execute control processing including: causing the nozzle to discharge the liquid material into a liquid to draw a dot or a line; and moving the nozzle without discharging the liquid material through the nozzle to cause the nozzle to extend the liquid material defining the dot or the line and thereby draw a planar representation.

[33] The software according to any one of the clauses [24] to [32], wherein the device for producing a pattern-containing liquid further includes a tank for containing the liquid material.

[34] The software according to any one of the clauses [24] to [33], wherein the device for producing a pattern-containing liquid further includes the nozzle.

[35] The software according to any one of the clauses [24] to [34], wherein the device for producing a pattern-containing liquid further includes a pump configured to deliver the liquid material to the nozzle.

- Advantageous Effects of Invention

The present invention can provide a method for producing a pattern-containing liquid, a pattern-containing liquid, and a device for producing a pattern-containing liquid each having a high flexibility in designing a pattern in a liquid, as well as software to be operated in the device for producing a pattern-containing liquid.

BRIEF DESCRIPTION OF THE DRAWINGS

FIGS. 1A to 1D are schematic diagrams of a specific example of a first drawing method in the method for producing a pattern-containing liquid according to the present invention; FIG. 1A illustrates a nozzle-preparation step; FIG. 1B illustrates a drawing step; FIG. 1C illustrates a removing step; and FIG. 1D illustrates a pattern observed from the front.
FIGS. 2A to 2C are schematic diagrams of a specific example of a second drawing method in the method for producing a pattern-containing liquid according to the present invention; FIG. 2A illustrates a nozzle-preparation step; FIG. 2B illustrates a drawing step;

and FIG. 2C illustrates a removing step.
FIGS. 3A to 3F are schematic diagrams of a specific example of a third drawing method in the method for producing a pattern-containing liquid according to the present invention; FIG. 3A illustrates a first nozzle-preparation step; FIG. 3B illustrates a first drawing step; FIG. 3C illustrates a second nozzle-preparation step; FIG. 3D illustrates a second drawing step; FIG. 3E illustrates a removing step; and FIG. 3F illustrates a pattern observed from the front.
FIGS. 4A to 4E are schematic diagrams of a specific example of a fourth drawing method in the method for producing a pattern-containing liquid according to the present invention; FIG. 4A illustrates a nozzle-preparation step; FIG. 4B illustrates a first-line-drawing step; FIG. 4C illustrates a second-line-drawing step; FIG. 4D illustrates a plane-drawing step; and FIG. 4E illustrates a removing step.
FIGS. 5A to 5D are schematic diagrams of a specific example of a fifth drawing method (method of drawing a plane from a dot) in the method for producing a pattern-containing liquid according to the present invention; FIG. 5A illustrates a nozzle-preparation step; FIG. 5B illustrates a dot-drawing step; FIG. 5C illustrates a plane-drawing step; and FIG. 5D illustrates a removing step.
FIGS. 6A to 6E are schematic diagrams of a specific example of a fifth drawing method (method of drawing a plane from a line) in the method for producing a pattern-containing liquid according to the present invention; FIG. 6A illustrates a nozzle-preparation step; FIG. 6B illustrates a line-drawing step; FIG. 6C illustrates a nozzle-moving step; FIG. 6D illustrates a plane-drawing step; and FIG. 6E illustrates a removing step.
Fig. 7 is a graph of theoretical values of the relationship between a typical amount of movement in one hour of a microparticle placed in a liquid and the diameter of the microparticle.
Fig. 8 is a conceptual diagram of a device for producing a pattern-containing liquid according to the present invention in which a pattern is formed in a liquid.
Fig. 9 is a conceptual diagram of a device for producing a pattern-containing liquid according to the present invention in which a gantry system is used.
Fig. 10 is a conceptual diagram of a device for producing a pattern-containing liquid according to the present invention in which a robot arm is used.
FIG. 11 is a schematic perspective view of a device prototype for producing a pattern-containing liquid in Reference Example 1.
FIG. 12 includes a photograph and schematic diagram of a pattern drawn in Comparative Example 1 corresponding to Example 1; the left is a photograph of the pattern observed from a side of a container (with the drawing surface observed from the front), and the right is a schematic diagram of the pattern observed in the direction parallel to the drawing surface.

FIG. 13 includes a photograph and schematic diagram of a pattern drawn in Example 1; the left is a photograph of the pattern observed from a side of a container (with the drawing surface observed from the front), and the right is a schematic diagram of the pattern observed in the direction parallel to the drawing surface.

FIG. 14 is a photograph of a pattern drawn in Comparative Example 2 corresponding to Example 2, showing the pattern observed from the top of the liquid (with the drawing surface observed from the front).

FIG. 15 is a schematic diagram of a method of drawing a pattern in Example 2.

FIG. 16 is a photograph of a pattern drawn in Example 2, showing the pattern observed from the top of the liquid (with the drawing surface observed from the front).

FIG. 17 includes schematic diagrams of a method of drawing a pattern in Example 3 and in Comparative Example 3 corresponding thereto; the top is a schematic diagram of the pattern with the drawing surface observed from the front, and the bottom is a schematic diagram of the pattern with the drawing surface observed diagonally.

FIG. 18 includes photographs of patterns drawn in Example 3 and in Comparative Example 3 corresponding thereto, showing the patterns observed from a side of a container (with the drawing surfaces observed from the front).

FIG. 19 includes schematic diagrams of a method of drawing a pattern in Example 4; the top is a schematic diagram of the pattern with the drawing surface observed from the front, and the bottom is a schematic diagram of the pattern with the drawing surface observed diagonally.

FIG. 20 includes photographs of patterns drawn in Example 4, showing the patterns observed from the top of the liquid (with the drawing surfaces observed from the front).

FIG. 21 includes schematic diagrams of a method of drawing a pattern in Example 5 and in Comparative Example 4 corresponding thereto; the top is a schematic diagram of the pattern with the drawing surface observed from the front, and the bottom is a schematic diagram of the pattern with the drawing surface observed diagonally.

FIG. 22 includes photographs of patterns drawn in Example 5 and in Comparative Example 4 corresponding thereto, showing the patterns observed from a side of a container (with the drawing surfaces observed from the front).

FIG. 23 includes schematic diagrams of a method of drawing a pattern in Example 6 and in Comparative Example 5 corresponding thereto; the top is a schematic diagram of the pattern with the drawing surface observed from the front, and the bottom is a schematic diagram of the pattern with the drawing surface observed diagonally.

FIG. 24 includes photographs of patterns drawn in Example 6 and in Comparative Example 5 corresponding thereto, showing the patterns observed from the top of the liquid (with the drawing surfaces observed from the front).

FIG. 25 is a schematic diagram of a first method of drawing a pattern in Example 7.

FIG. 26 includes photographs of a pattern drawn by the first drawing method in Example 7, showing the pattern observed from a side of a container (with the drawing surface observed from the front).

FIG. 27 is a schematic diagram of a second method of drawing a pattern in Example 7.

FIG. 28 includes photographs of a pattern drawn by the second drawing method in Example 7, showing the pattern observed from a side of a container (with the drawing surface observed from the front).

FIG. 29 is a schematic diagram of a third method of drawing a pattern in Example 7.

FIG. 30 includes photographs of a pattern drawn by the third drawing method in Example 7, showing the pattern observed from a side of a container (with the drawing surface observed from the front).

FIG. 31 includes photographs of a pattern drawn in Example 8, showing the pattern observed from a side of a container (with the drawing surface observed from the front).

FIGS. 32A and 32B are those illustrating the result of analyzing a suspension of squid ink particles used in Example 9; FIG. 32A is a graph of the particle size distribution; and FIG. 32B is a micrograph.

FIG. 33 includes photographs of a pattern drawn in Example 9, showing the pattern observed from a side of a container (with the drawing surface observed from the front).

FIG. 34 includes photographs of a pattern drawn in Example 10, showing the pattern observed from a side of a container (with the drawing surface observed from the front).

DESCRIPTION OF EMBODIMENTS

<Method for producing pattern-containing liquid>

A method for producing a pattern-containing liquid according to a first aspect of the present invention (hereinafter, also simply referred to as a production method according to the first aspect) is a method including discharging a pattern-forming liquid material into a liquid using a position-controllable nozzle to draw a representation, thereby producing a liquid containing a pattern of the representation, i.e., a pattern-containing liquid.

In the production method according to the first aspect, at least one of the following five drawing methods is used to form a pattern (representation), thereby producing a pattern-containing liquid. This enables production of a pattern-containing liquid with a high flexibility in design of a pattern in a liquid. The following describes the respective drawing methods.

At least two of the following first to fifth drawing methods may be used in combination.

The first drawing method includes: a drawing step of drawing a representation by discharging a pattern-forming liquid material into a liquid using a position-controllable nozzle; and after drawing the representation, a removing step of removing the nozzle from the representation by moving the nozzle in a direction away from a drawing surface for the representation without discharging the liquid material through the nozzle. This can reduce the interference between the drawn representation and the nozzle removing from the representation, stably forming a pattern.

The term "drawing surface" herein means a single virtual surface on which the representation (full representation) or a line (segment from the starting point to the end point) can be present. The drawing surface is usually a flat surface, and may be a curved surface such as a spherical surface. In the case where a plurality of drawing surfaces is present, all of them are usually flat surfaces. Alternatively, both a flat surface and a curved surface may be present. A single drawing surface may include a single representation or line alone, or may include a plurality of representations or lines. The drawing surface may have any dimensions, and may have a size at least including a representation or line present thereon. The drawing surface may have any shape, such as a polygonal shape, e.g., a rectangular shape, a circular shape, or an elliptic shape.

The "drawing surface" may be in any direction (orientation), and the drawing surface usually crosses (may optionally be perpendicular to) the direction of observing the representation or line. In other words, the representation or line present on the drawing surface is usually observed in a direction crossing (perpendicular to) the drawing surface.

In the removing step, the direction away from a drawing surface for the representation may be any direction crossing the drawing surface, i.e., any direction not parallel to the drawing surface. The nozzle is preferably moved in a direction forming an angle of 0° or greater and 45° or smaller to the direction perpendicular to the drawing surface for the representation, more preferably moved in a direction forming an angle of 0° or greater and 30° or smaller to the direction perpendicular to the drawing surface for the representation, still more preferably moved in the perpendicular direction (including a substantially perpendicular direction). This can more effectively reduce the interference between the drawn representation and the nozzle removing from the representation.

In the removing step, the nozzle is preferably removed to a gaseous phase outside the liquid. This enables more stable formation of a pattern.

The "gaseous phase" usually refers to the air existing around a liquid.

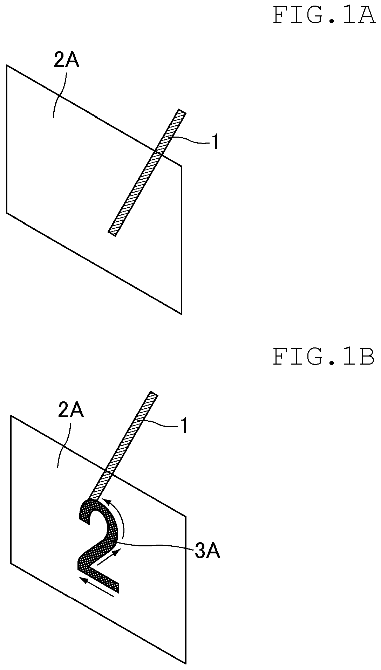

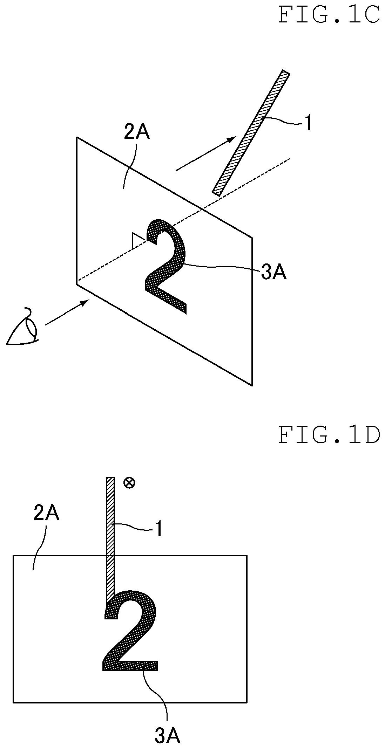

With reference to FIGS. 1A to 1D, the first drawing method is more specifically described. FIGS. 1A to 1D are schematic diagrams of a specific example of the first drawing method in the method for producing a pattern-containing liquid according to the present invention; FIG. 1A illustrates a nozzle-preparation step; FIG. 1B illustrates a drawing step; FIG. 1C illustrates a removing step; and FIG. 1D illustrates a pattern observed from the front.

In the first drawing method shown in FIGS. 1A to 1D, as illustrated in FIG. 1A, a nozzle 1 is placed at a predetermined position on a drawing surface 2A for a representation in a liquid while the nozzle 1 is not allowed to discharge a liquid material (nozzle-preparation step).

Next, as illustrated in FIG. 1B, the nozzle 1 is caused to start discharging the liquid material and start moving, and then the nozzle 1 is moved while discharging the liquid material. As a result, a representation 3A is drawn on the drawing surface 2A (drawing step). Note that the nozzle 1 is moved such that the nozzle 1 excluding its tip end always avoids crossing the drawing surface 2A during drawing of the representation 3A.

Then, as illustrated in FIG. 1C, after the representation 3A is drawn, the nozzle 1 is caused to stop discharging the liquid material and is removed in a direction away from the drawing surface 2A, such as a direction perpendicular to the drawing surface 2A, with the liquid material not discharged (removing step). In this step, the nozzle 1 is removed from the drawing surface 2A so as not to cross the drawing surface 2A.

In this step, part of the liquid material that defines the representation 3A may be pulled by the tip end of the nozzle 1 and thereby moved to the direction of removing the nozzle 1.

Consequently, as illustrated in FIG. 1D, a stable pattern with little interference by the nozzle 1 can be visually confirmed when the drawing surface 2A is observed from the front.

The second drawing method includes a drawing step of drawing a representation by discharging a pattern-forming liquid material into a liquid using a position-controllable nozzle, wherein, in the drawing step, the representation is drawn with a tip portion of the nozzle remaining at an angle of 10° or greater to a drawing surface for the representation. This can reduce the interference between the representation and the nozzle during drawing of the representation, stably forming a pattern.

The "tip portion of the nozzle" herein means the section between the tip end of the nozzle and the point 5 mm from the tip end.

In the drawing step, the angle at which the tip portion of the nozzle remains to the drawing surface for the representation is preferably 20° or greater, still more preferably 30° or greater. This enables more stable formation of a pattern.

In the drawing step, the angle at which the tip portion of the nozzle remains to the drawing surface for the representation may have any upper limit that can be selected as appropriate, and is preferably 90° or smaller, more preferably 80° or smaller, still more preferably 70° or smaller.

In the drawing step, the angle at which the tip portion of the nozzle remains to the drawing surface for the representation preferably falls within a range of 10° to 90°, 20° to 80°, or 30° to 70°, for example.

The nozzle may have any shape at least such that the tip portion forms the above angle. For example, the nozzle may have a linear shape as a whole, or may have a shape including a linear portion excluding the tip portion and the tip portion linearly or curvilinearly folded from an end of the linear portion. In the former case, the nozzle preferably satisfies the above angle as a whole. In the latter case, the linear portion may form any angle to the drawing surface for the representation, such as 0° or greater and smaller than 10°.

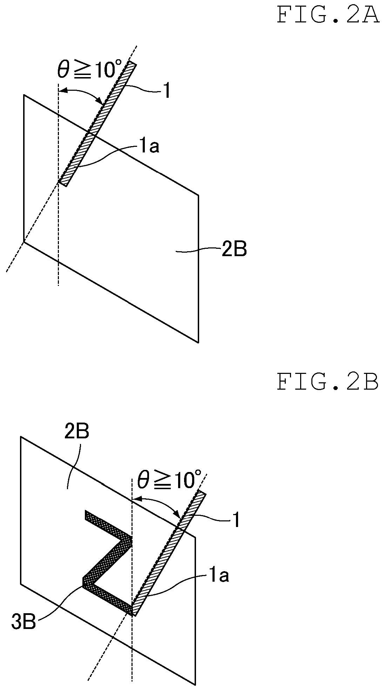

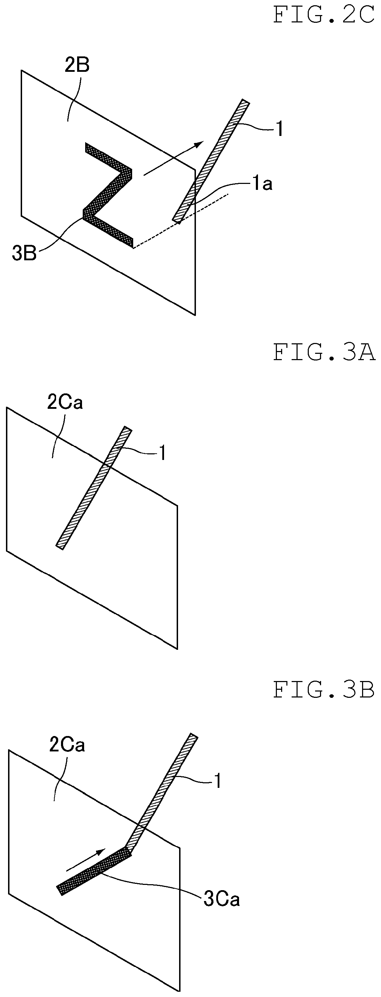

With reference to FIG. 2, the second drawing method is more specifically described. FIG. 2 includes schematic diagrams of a specific example of the second drawing method in the method for producing a pattern-containing liquid according to the present invention; (a) a nozzle-preparation step; (b) a drawing step; and (c) a removing step.

In the second drawing method shown in FIG. 2, as illustrated in FIG. 2(a), a nozzle 1 is placed at a predetermined position on a drawing surface 2B for a representation in a liquid while the nozzle 1 is not allowed to discharge a liquid material (nozzle-preparation step). In this step, the orientation of the nozzle 1 is controlled such that a tip portion 1a of the nozzle 1 forms an angle of 10° or greater to the drawing surface 2B.

Next, as illustrated in FIG. 2(b), the nozzle 1 is caused to start discharging the liquid material and start moving, and then the nozzle 1 is moved while discharging the liquid material with the tip portion 1a remaining at an angle of 10° or greater to the drawing surface 2B. As a result, a representation 3B is drawn on the drawing surface 2B (drawing step). Note that the nozzle 1 is moved such that the nozzle 1 excluding its tip end always avoids crossing the drawing surface 2B during drawing of the representation 3B.

Then, as illustrated in FIG. 2(c), after the representation 3B is drawn, the nozzle 1 is caused to stop discharging the liquid material and is removed from the representation 3B with the liquid material not discharged (removing step). In this step, the nozzle 1 is removed from the representation 3B so as not to cross the drawing surface 2B.

The third drawing method includes a drawing step of drawing a representation by discharging a pattern-forming liquid material into a liquid using a position-controllable nozzle, wherein, in the drawing step, a first line is drawn and then a second line is drawn on a drawing surface apart from a drawing surface for the first line. This can reduce the interference between the first line and the nozzle during drawing of the second line, stably forming a pattern.

In the third drawing method, a target pattern of the first line and the second line can be visually confirmed when observed in a direction that crosses (or may be perpendicular to) the drawing surface for the first line and the drawing surface for the second line. The drawing surface for the first line and the drawing surface for the second line preferably overlap each other while leaving a gap therebetween. The drawing surface for the first line may include a plurality of the first lines drawn thereon. Similarly, the drawing surface for the second line may include a plurality of the second lines drawn thereon.

The gap between the drawing surface for the first line and the drawing surface for the second line may be any size greater than 0 mm, preferably 2 mm or greater, more preferably 3 mm or greater. This enables more stable formation of a pattern.

The term "gap between the drawing surface for the first line and the drawing surface for the second line" herein means the shortest distance between the drawing surface for the first line and the drawing surface for the second line in the direction perpendicular to the drawing surface for the first line.

The upper limit of the gap between the drawing surface for the first line and the drawing surface for the second line may be any value that can be set as appropriate, and is preferably 30 mm or smaller, more preferably 20 mm or smaller, still more preferably 10 mm or smaller.

The gap between the drawing surface for the first line and the drawing surface for the second line preferably falls within a range of 2 to 30 mm, 2 to 20 mm, or 3 to 10 mm, for example.

The drawing surface for the first line and the drawing surface for the second line are preferably parallel to each other, and may be non-parallel to each other as long as they satisfy the above gap.

The drawing surface for the first line and the drawing surface for the second line are each commonly a flat surface. Alternatively, each of these may be a curved surface such as a spherical surface, or one of these may be a flat surface while the other may be a curved surface.

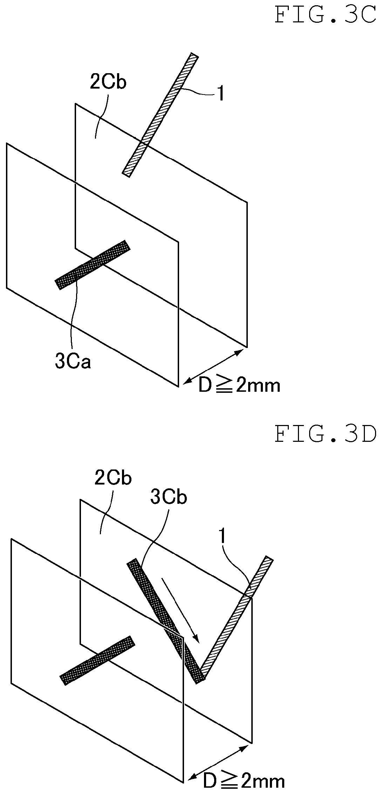

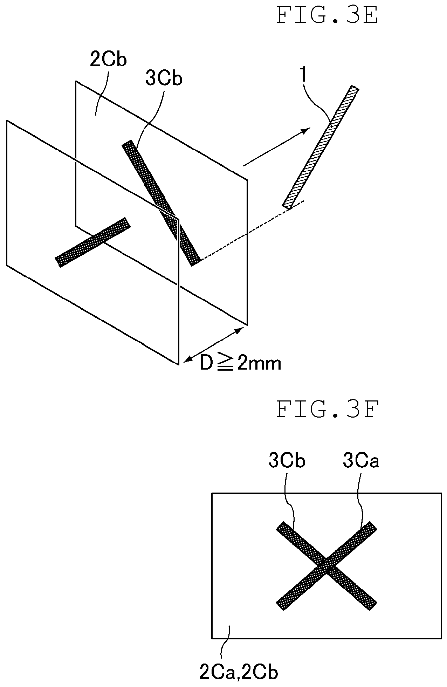

With reference to FIGS. 3A to 3F, the third drawing method is more specifically described. FIGS. 3A to 3F are schematic diagrams of a specific example of a third drawing method in the method for producing a pattern-containing liquid according to the present invention; FIG. 3A illustrates a first nozzle-preparation step; FIG. 3B illustrates a first drawing step; FIG. 3C illustrates a second nozzle-preparation step; FIG. 3D illustrates a second drawing step; FIG. 3E illustrates a removing step; and FIG. 3F illustrates a pattern observed from the front.

In the third drawing method shown in FIGS. 3A to 3F, as illustrated in FIG. 3A, a nozzle 1 is placed at a predetermined position on a first drawing surface 2Ca in a liquid while the nozzle 1 is not allowed to discharge a liquid material (first nozzle-preparation step).

Next, as illustrated in FIG. 3B, the nozzle 1 is caused to start discharging the liquid material and start moving, and then the nozzle 1 is moved while discharging the liquid material. As a result, a first line 3Ca is drawn on the first drawing surface 2Ca (first drawing step). Note that the nozzle 1 is moved such that the nozzle 1 excluding its tip end always avoids crossing the first drawing surface 2Ca during drawing of the first line 3Ca.

Next, as illustrated in FIG. 3C, after the first line 3Ca is drawn, the nozzle 1 is caused to stop discharging the liquid material and is removed from the first line 3Ca with the liquid material not discharged, and the nozzle 1 is placed at a predetermined position on a second drawing surface 2Cb (second nozzle-preparation step). In this step, the nozzle 1 is removed from the first line 3Ca so as not to cross the first drawing surface 2Ca. The second drawing surface 2Cb is defined at a position apart from the first drawing surface 2Ca.

Next, as illustrated in FIG. 3D, the nozzle 1 is caused to start discharging the liquid material and start moving, and then the nozzle 1 is moved while discharging the liquid material. As a result, a second line 3Cb is drawn on the second drawing surface 2Cb (second drawing step). Note that the nozzle 1 is moved such that the nozzle 1 excluding its tip end always avoids crossing the first drawing surface 2Ca and the second drawing surface 2Cb during drawing of the second line 3Cb.

Then, as illustrated in FIG. 3E, after the second line 3Cb is drawn, the nozzle 1 is caused to stop discharging the liquid material and is removed from the second line 3Cb with the liquid material not discharged (removing step). In this step, the nozzle 1 is removed from the second line 3Cb so as not to cross the first drawing surface 2Ca and the second drawing surface 2Cb.

Consequently, as illustrated in FIG. 3F, a stable pattern with little interference by the nozzle 1, specifically a pattern of the first line 3Ca and the second line 3Cb crossing each other, can be visually confirmed when the drawing surfaces 2Ca and 2Cb are observed from the front. Note that the first line 3Ca and the second line 3Cb do not actually cross each other.

As described above, the third drawing method includes a drawing step of drawing a representation by discharging a pattern-forming liquid material into a liquid using a position-controllable nozzle, wherein, in the drawing step, after a first line is drawn, a second line is drawn so as to three-dimensionally cross the first line, i.e., to cross the first line while leaving a gap between the first line and the second line.

The fourth drawing method includes a drawing step of drawing a representation by discharging a pattern-forming liquid material into a liquid using a position-controllable nozzle, wherein, in the drawing step, a plurality of parallel adjacent lines is drawn to draw a planar representation. This enables stable formation of a planar pattern.

The plurality of lines may be linear lines or may be curved lines. The plurality of lines may have the same length, or at least one line may differ in length from the other lines.

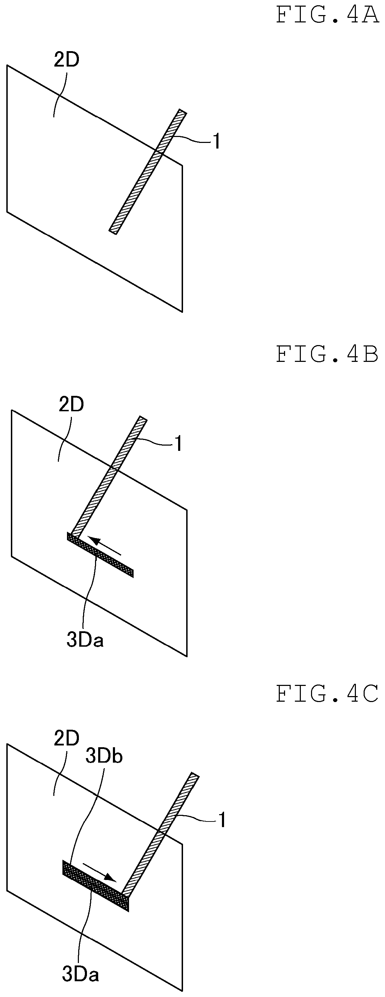

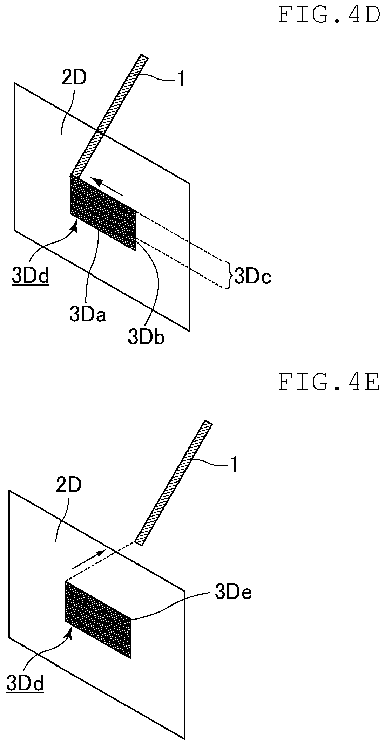

With reference to FIGS. 4A to 4E, the fourth drawing method is more specifically described. FIGS. 4A to 4E are schematic diagrams of a specific example of the fourth drawing method in the method for producing a pattern-containing liquid according to the present invention; FIG. 4A illustrates a nozzle-preparation step; FIG. 4B illustrates a first-line-drawing step; FIG. 4C illustrates a second-line-drawing step; FIG. 4D illustrates a plane-drawing step; and FIG. 4E illustrates a removing step.

In the fourth drawing method shown in FIG. 4, as illustrated in FIG. 4A, a nozzle 1 is placed at a predetermined position on a drawing surface 2D in a liquid while the nozzle 1 is not allowed to discharge a liquid material (nozzle-preparation step).

Next, as illustrated in FIG. 4B, the nozzle 1 is caused to start discharging the liquid material and start moving, and then the nozzle 1 is moved while discharging the liquid material. As a result, a first line 3Da is drawn on the drawing surface 2D (first-line-drawing step).

Then, as illustrated in FIG. 4C, the nozzle 1 is slightly shifted from the first line 3Da while remaining discharging the liquid material, so that the nozzle 1 is moved parallelly to the first line 3Da. As a result, a second line 3Db is drawn parallelly adjacent to the first line 3Da on the drawing surface 2D (second-line-drawing step).

Similarly and optionally, as illustrated in FIG. 4D, one or more lines 3Dc are drawn on the drawing surface 2D parallelly adjacent to the first line 3Da and the second line 3Db. As a result, a planar representation 3Dd, e.g., a rectangular pattern, is drawn on the drawing surface 2D (plane-drawing step). Note that the nozzle 1 is moved such that the nozzle 1 excluding its tip end always avoids crossing the drawing surface 2D during drawing of these lines.

Then, as illustrated in FIG. 4E, after all lines are (the planar representation 3Dd is) drawn, the nozzle 1 is caused to stop discharging the liquid material and is removed from the final line 3De with the liquid material not discharged (removing step). In this step, the nozzle 1 is removed from the drawing surface 2D so as not to cross the drawing surface 2D.

In the fourth drawing method, as illustrated in FIG. 4B to FIG. 4D, a plurality of lines may be drawn with a so-called single stroke, or may be drawn such that, after a line is drawn, the nozzle is moved to a position adjacent to the starting point (or may be a point between the starting point and the end point) of this line with the liquid material not discharged, and is then caused to start drawing a next line. These drawing steps may be combined with each other.

The fifth drawing method includes a drawing step of drawing a representation by discharging a pattern-forming liquid material into a liquid using a position-controllable nozzle, wherein, in the drawing step, a dot or a line is drawn and the liquid material defining the dot or the line is extended with the nozzle to draw a planar representation. This enables stable formation of a planar pattern.

The line before extension is commonly a linear line, and may be a curved line such as an arc.

Non-limiting examples of the planar shape of the planar representation include polygonal shapes, e.g., a rectangular shape, a circular shape, an elliptic shape, and a teardrop shape in the case of extending a dot, as well as a rectangular shape in the case of extending a line.

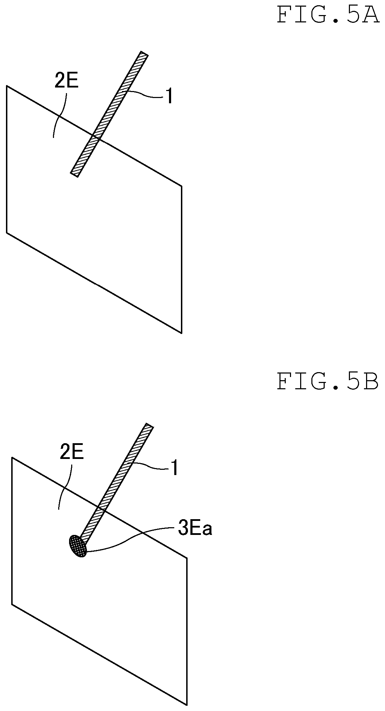

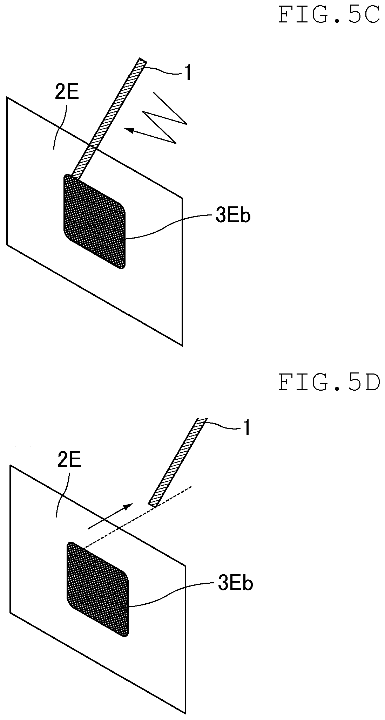

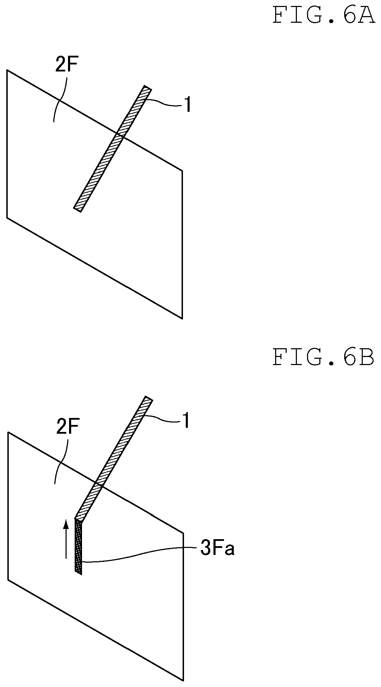

With reference to FIGS. 5A to 5D and FIGS. 6A to 6E, the fifth drawing method is more specifically described. FIGS. 5A to 5D are schematic diagrams of a specific example of the fifth drawing method (method of drawing a plane from a dot) in the method for producing a pattern-containing liquid according to the present invention; FIG. 5A illustrates a nozzle-preparation step; FIG. 5B illustrates a dot-drawing step; FIG. 5C illustrates a plane-drawing step; and FIG. 5D illustrates a removing step.

In the fifth drawing method shown in FIGS. 5A to 5D, as illustrated in FIG. 5A, a nozzle 1 is placed at a predetermined position on a drawing surface 2E in a liquid while the nozzle 1 is not allowed to discharge a liquid material (nozzle-preparation step).

Next, as illustrated in FIG. 5B, the nozzle 1 is caused to start discharging the liquid material while remaining stopped, whereby a dot 3Ea is drawn on the drawing surface 2E (dot-drawing step).

Next, as illustrated in FIG. 5C, after the dot 3Ea is drawn, the nozzle 1 is caused to stop discharging the liquid material and is moved in a variety of directions within a predetermined area (area to be a planar pattern) on the drawing surface 2E with the liquid material not discharged, whereby the liquid material defining the dot 3Ea is extended with the tip portion of the nozzle 1. As a result, a planar representation 3Eb, e.g., a rectangular pattern, is drawn on the drawing surface 2E (plane-drawing step). Note that the nozzle 1 is moved such that the nozzle 1 excluding its tip end always avoids crossing the drawing surface 2E during drawing of the representation 3Eb.

Then, as illustrated in FIG. 5D, after the planar representation 3Eb is drawn, the nozzle 1 is removed from the representation 3Eb with the liquid material not discharged (removing step). In this step, the nozzle 1 is removed from the representation 3Eb so as not to cross the drawing surface 2E.

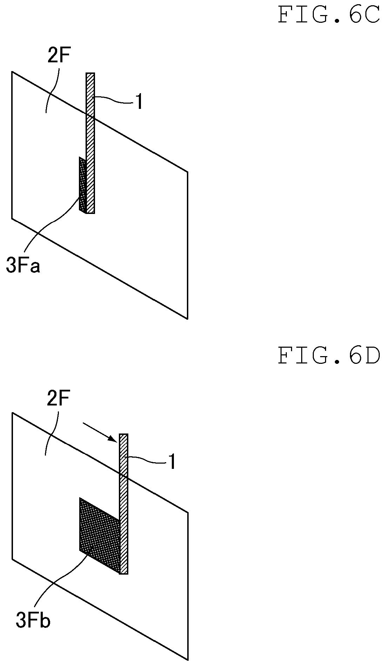

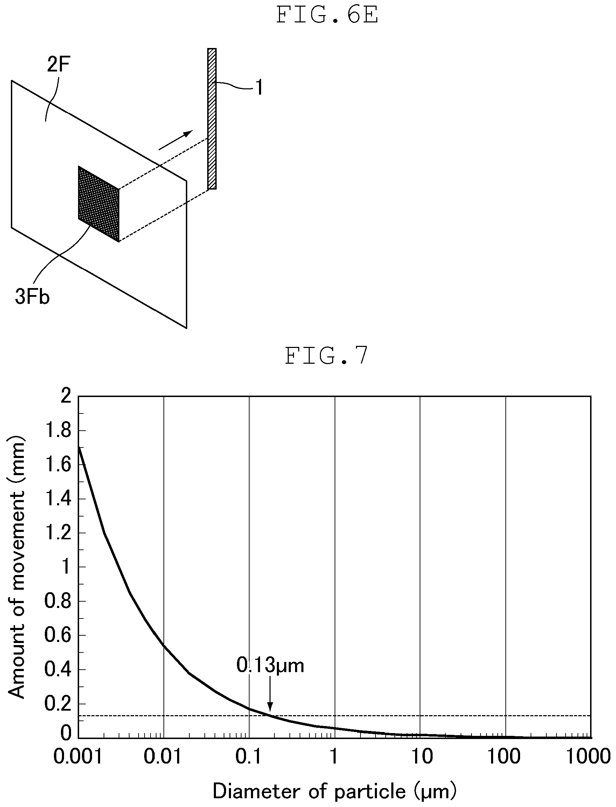

FIGS. 6A to 6E are schematic diagrams of a specific example of the fifth drawing method (method of drawing a plane from a line) in the method for producing a pattern-containing liquid according to the present invention; FIG. 6A illustrates a nozzle-preparation step; FIG. 6B illustrates a line-drawing step; FIG. 6C illustrates a nozzle-moving step; FIG. 6D illustrates a plane-drawing step; and FIG. 6E illustrates a removing step.

In the fifth drawing method shown in FIGS. 6A to 6E, as illustrated in FIG. 6A, a nozzle 1 is placed at a predetermined position on a drawing surface 2F in a liquid while the nozzle 1 is not allowed to discharge a liquid material (nozzle-preparation step).

Next, as illustrated in FIG. 6B, the nozzle 1 is caused to start discharging the liquid material and start moving, and then the nozzle 1 is linearly moved while discharging the liquid material. As a result, a linear line 3Fa is drawn on the drawing surface 2F (linear-line-drawing step). Note that the nozzle 1 is moved such that the nozzle 1 excluding its tip end always avoids crossing the drawing surface 2F during drawing of the linear line 3Fa.

Then, as illustrated in FIG. 6C, after the linear line 3Fa is drawn, the nozzle 1 is caused to stop discharging the liquid material and is moved so as to overlap the linear line 3Fa with the liquid material not discharged (nozzle-moving step).

Next, as illustrated in FIG. 6D, the nozzle 1 is moved in a direction away from the linear line 3Fa (e.g., a direction perpendicular to the linear line 3Fa, i.e., a direction of the line width of the linear line 3Fa) on the drawing surface 2F, whereby the liquid material defining the linear line 3Fa is extended with the nozzle 1 (e.g., the tip portion thereof). As a result, a planar representation 3Fb, e.g., a rectangular pattern, is drawn on the drawing surface 2F (plane-drawing step). Note that the nozzle 1 is moved such that the nozzle 1 always locates on the drawing surface 2F (parallel to the drawing surface 2F) during drawing of the representation 3Fb.

Then, as illustrated in FIG. 6E, after the planar representation 3Fb is drawn, the nozzle 1 is removed from the representation 3Fb with the liquid material not discharged (removing step). In this step, the nozzle 1 is removed from the representation 3Fb so as not to cross the drawing surface 2F.

The following continues to describe the features common to the first to fifth drawing methods.

The nozzle is a hollow pipe having an opening at each end. The pattern-forming liquid material is introduced through the base end of the nozzle, passed through the hollow inside the nozzle, and then discharged through the tip end of the nozzle. The three-dimensional position of the nozzle and the discharge flow rate of the pattern-forming liquid material discharged through the tip end of the nozzle are commonly controlled by a controller of a device for producing a pattern-containing liquid to be described later. Any number of nozzles, such as one nozzle or multiple nozzles, may be used.

The nozzle is preferably flexibly movable along multiple axes (e.g., three or more axes and eight or less axes). This enables easy formation of a 3D pattern as a pattern of the pattern-forming liquid material. Not only the nozzle but also a container of a liquid may be moved.

The tip end of the nozzle may have any opening shape, and is preferably a circular, elliptic, triangular, rectangular, square, rhombic, V-shaped, U-shaped, or C-shaped tip end.

The lower limit of the nozzle diameter is not limited and is preferably 0.1 mm or greater, more preferably 0.2 mm or greater. The upper limit of the nozzle diameter is not limited and is preferably 15.0 mm or smaller, more preferably 10.0 mm or smaller, 5.0 mm or smaller, or 3.0 mm or smaller. The upper limit of the nozzle diameter may be 1.0 mm or smaller.

The nozzle diameter preferably falls within a range of 0.1 to 15.0 mm, 0.1 to 10.0 mm, 0.1 to 5.0 mm, 0.2 to 3.0 mm, or 0.2 to 1.0 mm, for example.

The "nozzle diameter" herein means the length measured at the longest portion of the opening at the tip end of the nozzle. For example, in the case of a nozzle having a circular opening at the tip end, the term indicates the diameter. In the case of an elliptic opening, the term means the length of the major axis. In the case of a quadrangular opening, the term means the length of the longer diagonal. In the case of a nozzle having a recessed opening at the tip end, such as a V-shaped, U-shaped, or C-shaped opening, the term means the diameter of the smallest circle that encloses the shape.

The discharge flow rate (discharge rate) of the liquid material discharged through the nozzle is preferably 0.1 $\mu$L/s or more and 200 mL/s or less, more preferably 0.2 $\mu$L/s or more and 50 mL/s or less, still more preferably 0.3 $\mu$L/s or more and 20 mL/s or less. The discharge flow rate (discharge rate) of the liquid material discharged through the nozzle is also referred to simply as "the discharge flow rate of the nozzle" hereinbelow.

The lower limit of the nozzle speed during drawing is not limited and is preferably 0.1 mm/s or higher, more preferably 0.5 mm/s or higher or 1 mm/s or higher. The upper limit of the nozzle speed during drawing is not limited and is preferably 250 mm/s or lower, more preferably 150 mm/s or lower, 130 mm/s or lower, or 100 mm/s or lower.

The nozzle speed during drawing preferably falls within a range of 0.1 to 250 mm/s, 0.1 to 150 mm/s, 0.5 to 130 mm/s, or 1 to 100 mm/s, for example.

The lower limit of the nozzle speed between one representation (line) to another representation (line) is not limited and is preferably 0.1 mm/s or higher, more preferably 0.5 mm/s or higher or 1 mm/s or higher. The upper limit of the nozzle speed between one representation (line) to another representation (line) is not limited and is preferably 250 mm/s or lower, more preferably 150 mm/s or lower, 130 mm/s or lower, or 100 mm/s or lower.

The nozzle speed between one representation (line) to another representation (line) preferably falls within a range of 0.1 to 250 mm/s, 0.1 to 150 mm/s, 0.5 to 130 mm/s, or 1 to 100 mm/s, for example.

The lower limit of the acceleration of the nozzle during drawing is not limited and is preferably 0.000001 mm/s$^2$ or higher, 0.1 mm/s$^2$ or higher, or 1 mm/s$^2$ or higher. The upper limit of the acceleration of the nozzle during drawing is not limited and is preferably 250 mm/s$^2$ or lower, 150 mm/s$^2$ or lower, 130 mm/s$^2$ or lower, or 100 mm/s$^2$ or lower.

The acceleration of the nozzle during drawing preferably falls within a range of 0.000001 to 250 mm/s$^2$, 0.000001 to 150 mm/s$^2$, 0.1 to 130 mm/s$^2$, or 1 to 100 mm/s$^2$, for example.

The lower limit of the acceleration of the nozzle between one representation (line) to another representation (line) is not limited and is preferably 0.000001 mm/s$^2$ or higher, 0.1 mm/s$^2$ or higher, or 1 mm/s$^2$ or higher. The upper limit of the acceleration of the nozzle between one representation (line) to another representation (line) is not limited and is preferably 250 mm/s$^2$ or lower, 150 mm/s$^2$ or lower, 130 mm/s$^2$ or lower, or 100 mm/s$^2$ or lower.

The acceleration of the nozzle between one representation (line) to another representation (line) preferably falls within a range of 0.000001 to 250 mm/s$^2$, 0.000001 to 150 mm/s$^2$, 0.1 to 130 mm/s$^2$, or 1 to 100 mm/s$^2$, for example.

The pattern to be formed with the pattern-forming liquid material may be any of a 1D pattern (line), a 2D pattern (plane), and a 3D pattern (solid). The type of the pattern is not limited. Examples of the pattern include, but are not limited to, those generating color vision such as symbols, including characters, and pictures, those generating taste, mouthfeel, or texture such as uneven distribution of components, and those generating these senses in combination.

Each representation to be drawn with the pattern-forming liquid material may include a linear portion and/or a curved portion; Specific examples include symbols, including characters, and pictures. Each line drawn with the pattern-forming liquid material may be a linear line or may be a curved line, and may include one or more linear portions and/or one or more curved portions.

Preferably, the liquid is contained in a container (e.g., glassware or cup) and the nozzle has a length that is at least greater than the depth of the liquid contained in the container. This enables formation of a pattern of the liquid material at any position in the liquid using the nozzle.

The pattern-forming liquid material draws a representation or a line while it is not fixed or solidified in a liquid, thereby forming a pattern. In other words, a pattern formed with the pattern-forming liquid material remains unfixed or unsolidified in a liquid and floats in the liquid.

The pattern-forming liquid material may be any liquid-state fluid, and can be selected as appropriate in accordance with the use of the production method according to the first aspect, i.e., what is produced as a pattern-containing liquid.

The liquid is also not limited and can be selected as appropriate similarly in accordance with the use of the production method according to the first aspect.

The following describes a pattern-forming liquid material and a liquid (hereinafter, the liquid into which the pattern-forming liquid material is discharged is also referred to as a second liquid) that are suitable for producing, as a pattern-containing liquid, a drink or cosmetic in which a pattern is formed or a cell-pattern-containing liquid based on first and second pattern-forming methods suitable for these cases.

The following features can be applied to the uses other than the above as appropriate.

The first pattern-forming method includes discharging, as the pattern-forming liquid material, a material in which micro-sized first microparticles containing a first edible organic substance are dispersed in a first liquid (hereinafter, referred to as a microparticle-dispersed material) into a second liquid using a position-controllable nozzle, thereby forming a pattern (representation or line) of the first microparticles.

This enables drawing of a pattern, such as a character or picture, of the first microparticles in the second liquid, which serves as a field, and also maintaining its shape. Accordingly, the method can provide a pattern-containing liquid with a flexibly designed pattern such as color vision, taste, flavor, mouthfeel, or texture. For example, introducing components such as a colorant, a taste substance, and a flavor component into the first microparticles enables designing spatial color vision, taste, and flavor in the second liquid. Also, controlling the aggregation of the first microparticles enables designing of spatial mouthfeel or texture in the second liquid. Further, micro-designing of a pattern of the first microparticles enables production of plant-based beverages with low environmental load having mouthfeel similar to that of beverages with high environmental load, such as real milk and coffee.

The "liquid" herein may be any liquid substance that can be taken by drinking or can be applied to the skin. Accordingly, the first liquid and the second liquid are each basically preferably an aqueous solution.

The first liquid and the second liquid may be of any type and may include drinks in general. Specific examples thereof include water; tea; coffee; soft drinks such as fruit juice drinks, soda drinks, functional drinks, sports drinks, energy drinks, and alcohol-free drinks; alcoholic drinks; quasi-drug energy drinks; milk; soy milk; soups; smoothie; frozen drinks; frozen cocktails; and milk shakes. The first liquid and the second liquid to be used may also be any raw material liquid for foods and drinks such as unset jelly liquid, ice cream base, and soy milk mixed with bittern (unset tofu). The pattern-containing liquid may be set into a solid form. Solidifying the pattern-containing liquid is preferably achieved by freezing, for example. The frozen pattern-containing liquid, i.e., a pattern-containing solid may be defrosted. Examples of pattern-containing solid prepared by solidifying the pattern-containing liquid include frozen drinks, frozen desserts such as ice cream and sherbet, and jelly. To make a pattern of the first microparticles visible from the outside of the second liquid, the second liquid preferably has transparency that allows the pattern to be visible through the second liquid. From the same viewpoint, the second liquid may be either a colored or colorless, transparent liquid. The first liquid and the second liquid may be liquids of different types or may be liquids of the same type. The first liquid and the second liquid each may be a single type of liquid or may include multiple types of liquids which are mixed with or separated from each other.

The first liquid and the second liquid each may be of a type of a skin cosmetic such as perfume, skin toner, or lotion.

The first liquid and the second liquid each may be of a type of a liquid suitable for cell growth and maintenance, such as a culture medium or buffer.

The first microparticles are micro-sized particles containing a first edible organic substance. The first microparticles are micro-sized particles, preferably having a diameter of 0.13 $\mu$m or greater as described later. Thus, the first microparticles discharged into the second liquid exhibit a limited diffusion due to their sizes and can remain around the position where they are discharged for several tens of minutes to several tens of hours in a size-dependent manner. Thereby, a pattern-containing liquid can be produced in which a pattern of the first microparticles is placed at any position in the second liquid. The particle structure of the first microparticles may be, but is not limited to, a uniform structure, a core-shell structure, or a Janus structure.

The first microparticles are preferably insoluble or slightly soluble in the first liquid and the second liquid (it may be water). This makes it possible to store the first microparticles in the form of dispersion in the first liquid for a long term and to maintain the first microparticles in the second liquid for a long term.

The individual first microparticles of the pattern are preferably not chemically bonded to each other with a cross-linker. This can prevent the pattern of the first microparticles from forming a mass and thereby the pattern is more easily drinkable together with the second liquid.

A preferred size range of the first microparticles is described here. Particles added dropwise to a liquid diffuse by the Brownian motion. A typical moving distance x during a certain period of time t in this diffusion can be calculated by the following Formula 1 using the diffusion coefficient D of the particles.

$$x = \sqrt{(2Dt)} \qquad \text{(Formula 1)}$$

This diffusion coefficient D can be calculated from the Stokes-Einstein relation (following formula 2):

$$D = (k_B T)/(3\pi\eta d) \qquad \text{(Formula 2)}$$

wherein d represents the particle diameter, $k_B$ represents the Boltzmann's constant, T represents the absolute temperature, and $\eta$ represents the viscosity of liquid that forms the system.

When 1-um-diameter particles are added dropwise to a liquid having a viscosity equivalent to that of water at 20°C, the diffusion coefficient D is $4 \times 10^{-13}$ m$^2$/s and the individual particles typically move 50 $\mu$m in one hour and 260 $\mu$m in 24 hours.

Theoretical values of the relationship between a typical amount of movement in one hour of a microparticle placed in a liquid and the diameter of the microparticle are shown in Fig. 7. Fig. 7 is a graph of the theoretical values of the relationship between the typical amount of movement in one hour of a microparticle placed in a liquid and the diameter of the microparticle. As shown in Fig. 7, the greater the particle size is, the more restricted the diffusion by the Brownian motion is. Assuming that a microparticle-dispersed material containing microparticles is used to draw a pattern with a line width of 1 mm in a liquid and that the microparticles constituting the line diffuse three-dimensionally, the diameter of the microparticles that thickens the line by 30% (0.3 mm) or more in one hour is 0.13 $\mu$m or smaller. For example, in the case where a microparticle-dispersed material containing 0.13-um-diameter microparticles is used to draw two lines each having a line width of 1 mm at an interval of 1 mm and where each line thickens 1.3 times, the distance between the two adjacent lines is still 0.3 mm and the two lines can therefore be distinguished from each other. In other words, using microparticles having a diameter of 0.13 $\mu$m or greater enables drawing of a pattern that is recognizable one hour after the drawing.

Accordingly, the diameter of the first microparticles may be 0.13 $\mu$m or greater, and is preferably 0.2 $\mu$m or greater and 1000 $\mu$m or smaller. With a diameter of 0.2 $\mu$m or greater, a pattern drawn with a line width of 1 mm in the second liquid can be sufficiently maintained even after the pattern is left for one hour. With a diameter of 1000 $\mu$m or smaller, the first microparticles can be less likely to give grainy texture when put into a mouth (for example, see the following Reference 1). From this viewpoint, the diameter is more preferably 100 $\mu$m or smaller. The diameter of the first microparticles is more preferably 0.3 $\mu$m or greater, still more preferably 0.5 $\mu$m or greater, while still more preferably 50 $\mu$m or smaller.

The "diameter of microparticles" herein means the mode diameter in the particle size distribution of the microparticles measured by dynamic light scattering (DLS).

Preferably, the ratio of the density of the first microparticles to the density of the second liquid (density of first microparticles/density of second liquid) is 0.9 or higher and 1.1 or lower, and the ratio of the density of the second liquid to the density of the first liquid (density of second liquid/density of first liquid) is 0.9 or higher and 1.1 or lower. In the case where these ratios are each 0.9 or higher and 1.1 or lower, a pattern of the first microparticles may less float or sink together with the first liquid in the second liquid. From this viewpoint, these ratios are each more preferably 0.92 or higher and 1.08 or lower, still more preferably 0.95 or higher and 1.05 or lower.

The "density" herein means the weight per unit volume. The "density of microparticles" herein means the density corresponding to the smallest density among the densities obtained as follows: microparticles are (or a microparticle-dispersed material is) added dropwise to solutions (e.g., glycerol aqueous solutions) of various concentrations and centrifuged under predetermined conditions (e.g., at 18500 $\times$ g for one minute); and the smallest density is then selected from the densities of the solutions in which no sinking of the microparticles is observed. The "density" of this solution and the liquids can be measured using a density meter (DMA 4500 M, available from Anton Paar GmbH).

The first microparticles preferably contain at least one component selected from the group consisting of a colorant, a taste component, a nutrient, and a flavor component. The presence of these additives in the first microparticles allows a pattern of the first microparticles to have a design with a variety of spatial senses. For example, in the presence of a colorant, a pattern of the first microparticles can exhibit a spatial color design; in the presence of a taste component, a pattern of the first microparticles can provide a spatial taste design; in the presence of a nutrient, a pattern of the first microparticles can provide a spatial nutrient design; and in the presence of a flavor component, a pattern of the first microparticles can provide a spatial fragrant design. Examples of the colorant include a red colorant, green colorant, blue colorant, yellow colorant, black colorant, and white colorant. Examples of the taste component include sucrose, fructose, table salt, glucose, amino acids, nucleic acids, acetic acid, malic acid, citric acid, caffeine, tannin, capsaicin, glycerol, and food extracts. Examples of the nutrient include vitamins, minerals, lipids, fatty acids, polypeptides, sugars, healthy material molecules, and food extracts. Examples of the flavor component include food flavoring compounds designated in Appended Table 1 of Ordinance for Enforcement of the Food Sanitation Act, such as vanillin, eugenol, geraniol, and citral, and food extracts. The first microparticles may include multiple types of particles which are different in terms of the presence or absence of colorant or in terms of the types of colorants contained (e.g., different colors). The same applies to the taste component, the nutrient, and the flavor component. The first microparticles may include multiple types of particles which are different in terms of the presence or absence of these additives or in terms of the types of additives contained.

The first microparticles preferably contain at least one of silica (silicon dioxide) or titania (titanium dioxide). The first microparticles containing these additives can better express a white color and can better develop other colors.

The first microparticles may contain a hydrophobic substance or hydrophilic substance for maintaining the aforementioned additives such as colorant and silica in the microparticles. The first microparticles may have a structure in which a layer containing a hydrophobic substance and a layer containing a hydrophilic substance are alternately arranged from the center to the outside, such as a trilayer structure of a hydrophilic substance, a hydrophobic substance, and a hydrophilic substance or of a hydrophobic substance, a hydrophilic substance, and a hydrophobic substance.

The first microparticles contain a first edible organic substance. The first edible organic substance is a substance that is to function as a main component for forming the particle shapes of the first microparticles. The "edible organic substance" herein means an organic substance to be eaten by a human, regardless of whether a human can digest it and whether a human can absorb it. The first edible organic substance may have any molecular weight, and the first edible organic substance is preferably a high molecular weight substance.

The first edible organic substance preferably includes at least one edible organic substance selected from the group consisting of a polysaccharide, polypeptide, higher alcohol, natural resin, lipid, higher fatty acid ester, polyphenol, polyvinyl alcohol, polyethylene glycol, and nucleic acid (DNA). The "polysaccharide" herein means a sugar in which multiple (two or more molecules of) monosaccharides are bonded to each other. The "polypeptide" herein means a compound in which many amino acids are strung by peptide bonds, and encompasses proteins.

Preferred specific examples of the polysaccharide include dextrin, pectin, agar, agarose, glucomannan, polydextrose, maltodextrin, alginic acid (e.g., sodium alginate, calcium alginate), cellulose, hemicellulose, chitin, chitosan, starch (e.g., amylum), dextran, agarose, sucrose, methyl cellulose, carboxymethyl cellulose, and hydroxypropyl cellulose. One of these may be used alone or two or more of these may be used in combination.

Preferred specific examples of the polypeptide include gelatin, hydrolyzed protein, collagen, and albumin. One of these may be used alone or two or more of these may be used in combination.

Preferred specific examples of the higher alcohol include dodecyl alcohol and cetyl alcohol. One of these may be used alone or two or more of these may be used in combination.

Preferred specific examples of the natural resin include gum arabic, shellac, wax, lignin, and polylactic acid. One of these may be used alone or two or more of these may be used in combination.

A preferred specific example of the lipid is lecithin.

For the above preferred specific examples of the components in different categories, such as a polysaccharide and a polypeptide, two or more of these may be used in combination.

Specific examples of the first edible organic substance include those mentioned as specific examples of the additives such as the aforementioned taste components and nutrients. These examples mentioned above are first edible organic substances that are to function also as a component such as a taste component or a nutrient. The "edible organic substance" herein includes not only what are called foods and food additives but also drugs and quasi drugs, and means an orally ingestible organic substance.

The first microparticles may be cells such as human-derived cells, animal cells, plant cells, microbial cells, spheroplasts, and organoids. Using any of these cells as the first microparticles allows a pattern of the first microparticles to have a variety of physiological functions. Note that these cells contain a first edible organic substance.

The first microparticles may aggregate in a noncovalent manner to generate mouthfeel or texture. This allows a pattern of the first microparticles to have a spatial design of mouthfeel or texture. The microparticles may be aggregated in a noncovalent manner by any method. For example, the surfaces of the microparticles may be charged with electricity for aggregation.

The first microparticles are dispersed in the first liquid before discharged into the second liquid, and are to be discharged as a microparticle-dispersed material into the second liquid using a position-controllable nozzle. As described, the first liquid forms a liquid substance containing the first microparticles so as to allow the first microparticles to be discharged into the second liquid using a nozzle. In the case where the first microparticles contain a colorant component (exhibit a color), the first liquid with the first microparticles dispersed therein, i.e., the microparticle-dispersed material, is to function as a pattern-forming ink.

The volume percent concentration of the first microparticles in the microparticle-dispersed material may be, but is not limited to, preferably 0.05% by volume or more and 50% by volume or less, more preferably 0.1% by volume or more and 40% by volume or less, still more preferably 0.5% by volume or more and 30% by volume or less.

The "volume percent concentration of the first microparticles in the microparticle-dispersed material" herein can be determined by the coulter counter method.

The microparticle-dispersed material to be discharged into the second liquid may be of any type. One microparticle-dispersed material alone may be discharged into the second liquid, or two or more microparticle-dispersed materials which are different in at least one of the type of the first microparticles or the type of the first liquid may be discharged into the second liquid simultaneously or successively.

To maintain a pattern of the first microparticles in the second liquid for a long term, the first liquid is preferably one compatible with the second liquid, and may be the same liquid as the second liquid or a liquid similar to the second liquid. This is described in detail below.

The first liquid and the second liquid preferably have an absolute difference in moisture content of 0% or greater and 50% or smaller. Combination of liquids with no difference in moisture content can change the taste or color vision without changing the mouthfeel or texture.

Combination of liquids with a difference in moisture content can change the mouthfeel or texture. This absolute difference therebetween is more preferably 25% or smaller, still more preferably 15% or smaller. In common cases, the moisture content of the first liquid is smaller than the moisture content of the second liquid.

The "moisture content of a liquid" herein can be determined by the loss on drying test. Specifically, a sample containing moisture (liquid herein) is weighed and placed in a temperature-constant chamber at a predetermined temperature so that the moisture is evaporated. The weight change of the sample is then calculated, whereby the moisture content can be determined.

The first liquid and the second liquid each preferably have a viscosity of 0.8 mPa·s or higher and 6 Pa·s or lower at 25°C. In the case where they each have a viscosity of 0.8 mPa·s or higher and 6 Pa·s or lower at 25°C, diffusion of the first liquid in the second liquid can be easily reduced. This allows a pattern of the first microparticles to maintain its shape in the second liquid for a longer term. From this viewpoint, the viscosity of each of them is more preferably 3 Pa·s or lower, still more preferably 1 Pa·s or lower at 25°C. In an embodiment, the viscosity of the first liquid and the viscosity of the second liquid are each preferably 1 mPa·s or higher and 100 mPa·s or lower, more preferably 1 mPa·s or higher and 50 mPa·s or lower at 25°C. The viscosity of the first liquid may be higher than the viscosity of the second liquid or vice versa, or they may be substantially equal to each other.

The "viscosity of a liquid" herein can be determined using a tuning fork vibro viscometer (e.g., SV-10 available from A & D Co., Ltd.).

Examples of the viscosities at 25°C of foods available as the first liquid and the second liquid are shown below: water 1 mPa·s; milk 2 to 10 mPa·s; soy source 5 to 10 mPa·s; fruit juice drinks 10 mPa·s; tomato juice 19 mPa·s; undiluted solution of lactic acid bacteria drink 40 to 50 mPa·s; salad oil 50 to 80 mPa·s; maple syrup 200 mPa·s; yogurt 500 mPa·s; Chuno source 170 to 800 mPa·s; egg yolk 500 to 900 mPa·s; tomato ketchup 2 Pa·s; mayonnaise 8 Pa·s; honey 10 to 50 Pa·s; and starch syrup 100 Pa·s.

The microparticles may also be dispersed in the second liquid into which the microparticle-dispersed material is to be discharged. In other words, micro-sized second microparticles containing a second edible organic substance may be dispersed in the second liquid and the microparticle-dispersed material may be discharged into the second liquid in which the second microparticles are dispersed. The microparticles may not be dispersed in the second liquid into which the microparticle-dispersed material is to be discharged. Accordingly, the microparticle-dispersed material is discharged into the second liquid in which the micro-sized second microparticles containing the second edible organic substance are dispersed in an amount of 0% by volume or more and 74% by volume or less.

The second microparticles in the second liquid may have any volume percent concentration that is 0% by volume or more and 74% by volume or less. The volume percent concentration is preferably 0.1% by volume or more and 70% by volume or less, more preferably 1% by volume or more and 60% by volume or less, still more preferably 5% by volume or more and 50% by volume or less. Since the concentration of microparticles in a liquid has no influence on the formation of a pattern in the liquid, this concentration can be set to any value. When the same particles are placed in a liquid in the densest arrangement, this arrangement constitutes the hexagonal close-packed structure and the atomic packing factor of this structure is calculated to be about 74% by volume. Thus, the highest volume percent concentration of the second microparticles in the second liquid is 74% by volume.

The "volume percent concentration of the second microparticles in the second liquid" herein can be determined by the coulter counter method.

The second microparticles are preferably not chemically bonded to each other with a crosslinker. This can prevent the second microparticles from forming a mass and thereby the second microparticles are more easily drinkable with the second liquid.

From the same viewpoint as in the first microparticles, the diameter of the second microparticles may be 0.13 μm or greater, preferably 0.2 μm or greater and 1000 μm or smaller, more preferably 100 μm or smaller. The diameter of the second microparticles is more preferably 0.3 μm or greater, still more preferably 0.5 μm or greater, while still more preferably 50 μm or smaller.

Similarly to the cases of the first microparticles and the second liquid, the ratios of the density of the second microparticles to the density of the first microparticles, to the density of the first liquid, and to the density of the second liquid (density of second microparticles/density of first microparticles, density of second microparticles/density of first liquid, and density of second microparticles/density of second liquid) are each preferably 0.9 or higher and 1.1 or lower. Each of these ratios is more preferably 0.92 or higher and 1.08 or lower, still more preferably 0.95 or higher and 1.05 or lower.

The second microparticles may contain at least one component selected from the group consisting of a colorant, a taste component, a nutrient, and a flavor component. Specific examples of these components include those mentioned for the first microparticles. The second microparticles may include multiple types of particles which are different in terms of the presence or absence of colorant or in terms of the types of colorants contained (e.g., different colors). The same applies to the taste component, the nutrient, and the flavor component. The second microparticles may include multiple types of particles which are different in terms of the presence or absence of these additives or in terms of the types of additives contained.

From the same viewpoint as in the first microparticles, the second microparticles preferably contain at least one of silica or titania.

The second microparticles may contain a hydrophobic substance or hydrophilic substance for maintaining the aforementioned additives such as colorant and silica in the microparticles.

The second microparticles contain a second edible organic substance. The second edible organic substance is a substance that is to function as a main component for forming the particle shapes of the second microparticles. The second edible organic substance may have any molecular weight, and the second edible organic substance is preferably a high molecular weight substance.

The second edible organic substance preferably includes at least one edible organic substance selected from the group consisting of a polysaccharide, polypeptide, higher alcohol, natural resin, lipid, higher fatty acid ester, polyphenol, polyvinyl alcohol, polyethylene glycol, and nucleic acid (DNA). Preferred specific examples of these edible organic substances include those mentioned for the first edible organic substance. Similarly to the case of the first edible organic substance, one preferred specific example of the edible organic substance may be used alone or two or more of these may be used in combination. For the above preferred specific examples of the components in different categories, such as a polysaccharide and a polypeptide, two or more of these may be used in combination. Similarly to the case of the first microparticles, specific examples of the edible organic substance may include those mentioned as specific examples of the additives such as a taste component and a nutrient. These examples mentioned above are edible organic substances that are to function also as a component such as a taste component or a nutrient.

The second microparticles may aggregate in a noncovalent manner to generate mouthfeel or texture. This can generate mouthfeel or texture in the second liquid in which the second microparticles are dispersed and thereby generate a difference in mouthfeel or texture between a pattern of the first microparticles in the colorant composition and the second liquid in which the second microparticles are dispersed.

Next, a second pattern-forming method is described. The features common to the first pattern-forming method are applicable to the second pattern-forming method and are therefore not elaborated hereinbelow.

The second pattern-forming method includes discharging, using a position-controllable nozzle, a first liquid, which serves as the pattern-forming liquid material, into a second liquid in which micro-sized microparticles containing an edible organic substance are dispersed, thereby forming a pattern (representation or line) of the first liquid.

This enables drawing of a pattern, such as a character or picture, of the first liquid in the second liquid with the microparticles dispersed therein, which serves as a field, and also maintaining its shape. Accordingly, the method can provide a pattern-containing liquid with a flexibly designed pattern such as color vision, taste, flavor, mouthfeel, or texture. For example, introducing components such as a colorant, a taste substance, and a flavor component into the first liquid enables designing of spatial color vision, taste, and flavor in the second liquid. Also, controlling the mouthfeel or texture of the first liquid enables designing of spatial mouthfeel or texture in the second liquid. Further, micro-designing of a pattern of the first liquid enables production of plant-based beverages with low environmental load having mouthfeel similar to that of beverages with high environmental load, such as real milk and coffee.

The microparticles are micro-sized particles containing an edible organic substance. The microparticles are micro-sized particles, preferably having a diameter of 0.13 $\mu$m or greater as described later. Thus, the microparticles dispersed in the second liquid exhibit a limited diffusion due to their sizes and can remain, after the first liquid is discharged into the second liquid, around the original position for several tens of minutes to several tens of hours in a size-dependent manner. In other words, the first liquid discharged into the second liquid can also remain around the position where it is discharged for several tens of minutes to several tens of hours. As a result, a pattern-containing liquid can be produced in which a pattern of the first liquid is placed at any position in the second liquid.

As described above, the first pattern-forming method and the second pattern-forming method are different only in whether the microparticles are discharged into a liquid or a liquid is discharged into another liquid in which the microparticles are dispersed. The features described for the first pattern-forming method are therefore appropriately applicable to the second pattern-forming method. For example, the second pattern-forming method may be used in any of the following embodiments.

The first liquid and the second liquid may be of any type and may include liquids in general. Specific examples thereof include those mentioned for the first pattern-forming method. The first liquid and the second liquid to be used may also be any raw material liquid for foods and drinks such as unset jelly liquid, ice cream base, and soy milk mixed with bittern (unset tofu). The pattern-containing liquid may be set into a solid form. Solidifying the pattern-containing liquid is preferably achieved by freezing, for example. The frozen pattern-containing liquid, i.e., a pattern-containing solid may be defrosted. Examples of pattern-containing solid prepared by solidifying the pattern-containing liquid include frozen drinks, frozen desserts such as ice cream and sherbet, and jelly. To make a pattern of the first liquid visible from the outside of the second liquid, the second liquid preferably has transparency that allows the pattern to be visible through the second liquid. From the same viewpoint, the second liquid may be either a colored or colorless, transparent liquid. The first liquid and the second liquid may be liquids of different types or may be liquids of the same type. The first liquid and the second liquid each may be a single type of liquid or may include multiple types of liquids which are mixed with or separated from each other.

The first liquid and the second liquid each may be of a type of a skin cosmetic such as perfume, skin toner, or lotion.

The first liquid and the second liquid each may be of a type of a liquid suitable for cell growth and maintenance, such as a culture medium or buffer.

In the second pattern-forming method, the first liquid needs not to contain micro-sized microparticles containing an edible organic substance.

One first liquid alone may be discharged into the second liquid in which the microparticles are dispersed, or two or more first liquids may be simultaneously or successively discharged into the second liquid in which the microparticles are dispersed.

The first liquid preferably contains at least one component selected from the group consisting of a colorant, a taste component, a nutrient, and a flavor component. The presence of these additives in the first liquid allows a pattern of the first liquid to have a design with a variety of spatial senses. For example, in the presence of a colorant, a pattern of the first liquid can exhibit a spatial color design; in the presence of a taste component, a pattern of the first liquid can provide a spatial taste design; in the presence of a nutrient, a pattern of the first liquid can provide a spatial nutrient design; and in the presence of a flavor component, a pattern of the first liquid can provide a spatial fragrant design. Examples of the colorant include a red colorant, green colorant, blue colorant, yellow colorant, black colorant, and white colorant. Examples of the taste component include sucrose, fructose, table salt, glucose, amino acids, nucleic acids, acetic acid, malic acid, citric acid, caffeine, tannin, capsaicin, glycerol, and food extracts. Examples of the nutrient include vitamins, minerals, lipids, fatty acids, polypeptides, sugars, healthy material molecules, and food extracts. Examples of the flavor component include food flavoring compounds designated in Appended Table 1 of Ordinance for Enforcement of the Food Sanitation Act, such as vanillin, eugenol, geraniol, and citral, and food extracts. The first liquid may include multiple types of liquids which are different in terms of the presence or absence of colorant or in terms of the types of colorants contained (e.g., different colors). The same applies to the taste component, the nutrient, and the flavor component. The first liquid may include multiple types of liquids which are different in terms of the presence or absence of these additives or in terms of the types of additives contained.

In the case where the first liquid contains a colorant component (exhibits a color), the first liquid is to function as a pattern-forming ink.

The particle structure of the microparticles may be, but is not limited to, a uniform structure, a core-shell structure, or a Janus structure.

The microparticles are preferably insoluble or slightly soluble in the first liquid and the second liquid (it may be water). To make a pattern of the first liquid visible from the outside of the second liquid, the microparticles may have transparency that allows the pattern to be visible through the microparticles dispersed in the second liquid. From the same viewpoint, the microparticles may be either a colored or colorless, transparent liquid.

The microparticles are preferably not chemically bonded to each other with a crosslinker. This can prevent a pattern of the microparticles from forming a mass and thereby the microparticles are more easily drinkable with the second liquid.

The diameter of the microparticles may be 0.13 $\mu$m or greater, and is preferably 0.2 $\mu$m or greater and 1000 $\mu$m or smaller. The diameter of the microparticles is more preferably 0.3 $\mu$m or greater, still more preferably 0.5 $\mu$m or greater, while still more preferably 50 $\mu$m or smaller.

The ratio of the density of the microparticles to the density of the second liquid (density of microparticles/density of second liquid) is preferably 0.9 or higher and 1.1 or lower. In the case where this ratio is 0.9 or higher and 1.1 or lower, the microparticles may less float or sink in the second liquid and therefore a pattern of the first liquid can be formed at any position in the second liquid. From this viewpoint, the ratio is more preferably 0.92 or higher and 1.08 or lower, still more preferably 0.95 or higher and 1.05 or lower.

The microparticles may contain at least one component selected from the group consisting of a colorant, a taste component, a nutrient, and a flavor component. Specific examples of the colorant, the taste component, the nutrient, and the flavor component include those mentioned for the first pattern-forming method. The microparticles may include multiple types of particles which are different in terms of the presence or absence of colorant or in terms of the types of colorants contained (e.g., different colors). The same applies to the taste component, the nutrient, and the flavor component. The microparticles may include multiple types of particles which are different in terms of the presence or absence of these additives or in terms of the types of additives contained.

The microparticles preferably contain at least one of silica (silicon dioxide) or titania (titanium dioxide).

The microparticles may contain a hydrophobic substance or hydrophilic substance for maintaining the aforementioned additives such as colorant and silica in the microparticles. The microparticles may have a structure in which a layer containing a hydrophobic substance and a layer containing a hydrophilic substance are alternately arranged from the center to the outside, such as a trilayer structure of a hydrophilic substance, a hydrophobic substance, and a hydrophilic substance or of a hydrophobic substance, a hydrophilic substance, and a hydrophobic substance.

The microparticles contain an edible organic substance. The edible organic substance is a substance that is to function as a main component for forming the particle shapes of the microparticles. The edible organic substance may have any molecular weight, and the edible organic substance is preferably a high molecular weight substance.

The edible organic substance preferably includes at least one edible organic substance selected from the group consisting of a polysaccharide, polypeptide, higher alcohol, natural resin, lipid, higher fatty acid ester, polyphenol, polyvinyl alcohol, polyethylene glycol, and nucleic acid (DNA). Preferred specific examples of these edible organic substances include those mentioned for the first edible organic substance in the first pattern-forming method. Similarly to the case of the first pattern-forming method, one preferred specific example of the edible organic substance may be used alone or two or more of these may be used in combination. For the above preferred specific examples of the components in different categories, such as a polysaccharide and a polypeptide, two or more of these may be used in combination.

The microparticles may be cells such as human-derived cells, animal cells, plant cells, microbial cells, spheroplasts, and organoids. Using any of these cells as the microparticles allows the second, microparticle-dispersed liquid to have a variety of physiological functions. Note that these cells contain an edible organic substance.

The microparticles may aggregate in a noncovalent manner to generate mouthfeel or texture.

The volume percent concentration of the microparticles in the second liquid may be, but is not limited to, preferably 0.05% by volume or more and 74% by volume or less, more preferably 0.1% by volume or more and 60% by volume or less, still more preferably 0.5% by volume or more and 50% by volume or less.

The "volume percent concentration of the microparticles in the second liquid" herein can be determined by the coulter counter method.

Similarly to the case of the first pattern-forming method, to maintain a pattern of the first liquid in the second liquid for a long term, the first liquid is preferably one compatible with the second liquid, and may be the same liquid as the second liquid or a liquid similar to the second liquid.

The ratio of the density of the second liquid to the density of the first liquid (density of second liquid/density of first liquid) is preferably 0.9 or higher and 1.1 or lower. In the case where this ratio is 0.9 or higher and 1.1 or lower, a pattern of the first liquid may less float or sink in the second liquid. From this viewpoint, the ratio is more preferably 0.92 or higher and 1.08 or lower, still more preferably 0.95 or higher and 1.05 or lower.

The first liquid and the second liquid preferably have an absolute difference in moisture content of 0% or greater and 50% or smaller. This absolute difference therebetween is more preferably 25% or smaller, still more preferably 15% or smaller. In common cases, the moisture content of the first liquid is higher than the moisture content of the second liquid.

The first liquid and the second liquid each preferably have a viscosity of 0.8 mPa·s or higher and 6 Pa·s or lower at 25°C. In the case where they each have a viscosity of 0.8 mPa·s or higher and 6 Pa·s or lower at 25°C, diffusion of the first liquid in the second liquid can be easily reduced. This allows a pattern of the first liquid to maintain its shape in the second liquid for a longer term. From this viewpoint, the viscosity of each of them is more preferably 3 Pa·s or lower, still more preferably 1 Pa·s or lower at 25°C. In an embodiment, the viscosity of the first liquid and the viscosity of the second liquid are each preferably 1 mPa·s or higher and 100 mPa·s or lower, more preferably 1 mPa·s or higher and 50 mPa·s or lower at 25°C. The viscosity of the first liquid may be higher than the viscosity of the second liquid or vice versa, or they may be substantially equal to each other.

In the case of producing a pattern-containing cosmetic, for example, a material in which the micro-sized first microparticles are dispersed in the first liquid may be discharged into the second liquid using a position-controllable nozzle, thereby forming a pattern of the first microparticles. Alternatively, the first liquid may be discharged, using a position-controllable nozzle, into the second liquid in which micro-sized microparticles are dispersed, thereby forming a pattern of the first solution.

The features of the microparticles and the liquids described for the first and second pattern-forming methods are appropriately applicable to methods for producing pattern-containing cosmetics and methods for producing pattern-containing drinks.

The microparticles and liquids used in these methods for producing pattern-containing cosmetics may be materials commonly usable for cosmetics.

The production method according to the first aspect is also applicable to a case where neither the first liquid nor the second liquid contains microparticles in the first and second pattern-forming methods. This case is described below as a third pattern-forming method.

The features common to the first and second pattern-forming methods are applicable to the third pattern-forming method and are therefore not elaborated hereinbelow.

The third pattern-forming method includes discharging, using a position-controllable nozzle, a first liquid, which serves as the pattern-forming liquid material, into a second liquid, thereby forming a pattern (representation or line) of the first liquid. Neither the first liquid nor the second liquid contains microparticles.

This can also provide a pattern-containing liquid with a flexibly designed pattern such as color vision, taste, flavor, mouthfeel, or texture. For example, introducing components such as a colorant, a taste substance, and a flavor component into the first liquid enables designing of spatial color vision, taste, and flavor in the second liquid. Also, controlling the viscosity or components of the first liquid enables designing of spatial mouthfeel or texture in the second liquid. Further, micro-designing of a pattern of the first liquid enables production of plant-based beverages with low environmental load having mouthfeel similar to that of beverages with high environmental load, such as real milk and coffee.

The first liquid and the second liquid may be of any type and may include liquids in general. Specific examples thereof include those mentioned for the first pattern-forming method. The first liquid and the second liquid to be used may also be any raw material liquid for foods and drinks such as unset jelly liquid, ice cream base, and soy milk mixed with bittern (unset tofu). The pattern-containing liquid may be set into a solid form. Solidifying the pattern-containing liquid is preferably achieved by freezing, for example. The frozen pattern-containing liquid, i.e., a pattern-containing solid may be defrosted. Examples of pattern-containing solid prepared by solidifying the pattern-containing liquid include frozen drinks, frozen desserts such as ice cream and sherbet, and jelly. To make a pattern of the first liquid visible from the outside of the second liquid, the second liquid preferably has transparency that allows the pattern to be visible through the second liquid. From the same viewpoint, the second liquid may be either a colored or colorless, transparent liquid. The first liquid and the second liquid may be liquids of different types or may be liquids of the same type. The first liquid and the second liquid each may be a single type of liquid or may include multiple types of liquids which are mixed with or separated from each other.

The first liquid and the second liquid each may be of a type of a skin cosmetic such as perfume, skin toner, or lotion.

The first liquid and the second liquid each may be of a type of a liquid suitable for cell growth and maintenance, such as a culture medium or buffer.

One first liquid alone may be discharged into the second liquid, or two or more first liquids may be simultaneously or successively discharged into the second liquid.

The first liquid preferably contains at least one component selected from the group consisting of a colorant, a taste component, a nutrient, and a flavor component. The presence of these additives in the first liquid allows a pattern of the first liquid to have a design with a variety of spatial senses. For example, in the presence of a colorant, a pattern of the first liquid can exhibit a spatial color design; in the presence of a taste component, a pattern of the first liquid can provide a spatial taste design; in the presence of a nutrient, a pattern of the first liquid can provide a spatial nutrient design; and in the presence of a flavor component, a pattern of the first liquid can provide a spatial fragrant design. Examples of the colorant include a red colorant, green colorant, blue colorant, yellow colorant, black colorant, and white colorant. Examples of the taste component include sucrose, fructose, table salt, glucose, amino acids, nucleic acids, acetic acid, malic acid, citric acid, caffeine, tannin, capsaicin, glycerol, and food extracts. Examples of the nutrient include vitamins, minerals, lipids, fatty acids, polypeptides, sugars, healthy material molecules, and food extracts. Examples of the flavor component include food flavoring compounds designated in Appended Table 1 of Ordinance for Enforcement of the Food Sanitation Act, such as vanillin, eugenol, geraniol, and citral, and food extracts. The first liquid may include multiple types of liquids which are different in terms of the presence or absence of colorant or in terms of the types of colorants contained (e.g., different colors). The same applies to the taste component, the nutrient, and the flavor component. The first liquid may include multiple types of liquids which are different in terms of the presence or absence of these additives or in terms of the types of additives contained.

In the case where the first liquid contains a colorant component (exhibits a color), the first liquid is to function as a pattern-forming ink.

Similarly to the case of the first pattern-forming method, to maintain a pattern of the first liquid in the second liquid for a long term, the first liquid is preferably one compatible with the second liquid, and may be the same liquid as the second liquid or a liquid similar to the second liquid.

The ratio of the density of the second liquid to the density of the first liquid (density of second liquid/density of first liquid) is preferably 0.9 or higher and 1.1 or lower. In the case where this ratio is 0.9 or higher and 1.1 or lower, a pattern of the first liquid may less float or sink in the second liquid. From this viewpoint, the ratio is more preferably 0.92 or higher and 1.08 or lower, still more preferably 0.95 or higher and 1.05 or lower.

The first liquid and the second liquid preferably have an absolute difference in moisture content of 0% or greater and 50% or smaller. This absolute difference therebetween is more preferably 25% or smaller, still more preferably 15% or smaller. In common cases, the moisture content of the first liquid is higher than the moisture content of the second liquid.

The first liquid and the second liquid each preferably have a viscosity of 0.8 mPa·s or higher and 6 Pa·s or lower at 25°C. In the case where they each have a viscosity of 0.8 mPa·s or higher and 6 Pa·s or lower at 25°C, diffusion of the first liquid in the second liquid can be easily reduced. This allows a pattern of the first liquid to maintain its shape in the second liquid for a longer term. From this viewpoint, the viscosity of each of them is more preferably 3 Pa·s or lower, still more preferably 1 Pa·s or lower at 25°C. In an embodiment, the viscosity of the first liquid and the viscosity of the second liquid are each preferably 1 mPa·s or higher and 100 mPa·s or lower, more preferably 1 mPa·s or higher and 50 mPa·s or lower at 25°C. The viscosity of the first liquid may be higher than the viscosity of the second liquid or vice versa, or they may be substantially equal to each other.

The production method according to the first aspect is a novel technique of forming a pattern in a liquid. This is therefore applicable to not only the aforementioned drinks and cosmetics but also a variety of fields. Specific examples thereof include production of drinks; printing of cell tissues; construction of polymer structures; regenerative medicine such as production of 3D tissues; perfumery and cosmetics such as perfume, toners, and creams; material industries such as materials involving localized physical properties and production of 3D devices; space industries such as production of drinks and production of devices in the space; sports uses such as information display on the water surface for swimming or water polo; artistic uses such as liquid-based art and expression of transience; leisure facilities such as liquid-based display boards, aquarium shows, and interactive attractions.

<Pattern-containing liquid>

Next, a pattern-containing liquid according to a second aspect of the present invention (hereinafter, also simply referred to as a pattern-containing liquid according to the second aspect) is described below. The features common to the production method according to the first aspect are applicable to the pattern-containing liquid according to the second aspect and are therefore not elaborated hereinbelow.

The pattern-containing liquid according to the second aspect is a pattern-containing liquid containing a liquid and a representation in the liquid, the representation being drawn using a pattern-forming liquid material, the representation including a first line drawn on a first drawing surface and a second line drawn on a drawing surface apart from the drawing surface. Thus, the representation can be produced by the third drawing method of the production method according to the first aspect. This allows the representation to have a stable pattern including the first line and the second line, improving the flexibility in design of a pattern in a liquid.

A target pattern of the first line and the second line (a pattern in which the first line crosses the second line) can be visually confirmed when the pattern-containing liquid according to the second aspect is observed in a direction that crosses (or may be perpendicular to) the drawing surface for the first line and the drawing surface for the second line. The drawing surface for the first line and the drawing surface for the second line preferably overlap each other while leaving a gap therebetween. The drawing surface for the first line may include a plurality of the first lines drawn thereon. Similarly, the drawing surface for the second line may include a plurality of the second lines drawn thereon.

From the same viewpoint as in the production method according to the first aspect, the gap between the drawing surface for the first line and the drawing surface for the second line may be any size greater than 0 mm, preferably 2 mm or greater, more preferably 3 mm or greater. This can provide a more stable pattern.

The upper limit of the gap between the drawing surface for the first line and the drawing surface for the second line may be any value that can be set as appropriate, and is preferably 30 mm or smaller, more preferably 20 mm or smaller, still more preferably 10 mm or smaller.

The gap between the drawing surface for the first line and the drawing surface for the second line preferably falls within a range of 2 to 30 mm, 2 to 20 mm, or 3 to 10 mm, for example.

The drawing surface for the first line and the drawing surface for the second line are preferably parallel to each other, and may be non-parallel to each other as long as they satisfy the above gap.

The drawing surface for the first line and the drawing surface for the second line are each commonly a flat surface. Alternatively, each of these may be a curved surface such as a spherical surface, or one of these may be a flat surface while the other may be a curved surface.

The liquid and the pattern-forming liquid material are as described for the production method according to the first aspect.

The pattern-containing liquid according to the second aspect may be a pattern-containing liquid containing a liquid and a representation in the liquid, the representation being drawn using a pattern-forming liquid material, wherein the representation may include a first line and a second line that is drawn so as to three-dimensionally cross the first line, i.e., to cross the first line while leaving a gap between the first line and the second line.

<Device for producing pattern-containing liquid>

Next, a device for producing a pattern-containing liquid according to a third aspect of the present invention (hereinafter, also simply referred to as a production device according to the third aspect) is described below. The features common to the production method according to the first aspect are applicable to the production device according to the third aspect and are therefore not elaborated hereinbelow.

The production device according to the third aspect includes a tank configured to contain a pattern-forming liquid material; a nozzle configured to discharge the liquid material; a pump configured to deliver the liquid material to the nozzle; and a controller configured to control the position of the nozzle and the discharge flow rate of the liquid material to be discharged through the nozzle. This allows the pump to feed the pattern-forming liquid material from the tank to the nozzle and allows the nozzle to discharge the pattern-forming liquid material to a predetermined position in the liquid while the controller controls the position of the nozzle and the discharge flow rate (discharge speed) of the pattern-forming liquid material. The discharge flow rate of the pattern-forming liquid material can be controlled by changing the pump pressure or the pressure inside the nozzle in response to voltage application to, for example, a piezoelectric element disposed at a nozzle portion. Accordingly, a pattern-containing liquid in which a pattern is formed in a liquid can be automatically formed by designing a pattern using software such as CAD and controlling the nozzle based on this design.

The production device according to the third aspect may exclude at least one of the tank, the nozzle, or the pump.

The controller is configured to execute at least one of the following five control processing steps to form a pattern (representation) using a nozzle, producing a pattern-containing liquid. This enables production of a pattern-containing liquid with a high flexibility in design of a pattern in a liquid. The following describes the respective control processing steps.

At least two of the following first to fifth control processing steps may be used in combination.

The liquid and the pattern-forming liquid material are as described for the production method according to the first aspect.

The first control processing step causes the nozzle to discharge the liquid material into a liquid to draw a representation, and moves the nozzle in a direction away from a drawing surface for the representation without discharging the liquid material through the nozzle to remove the nozzle from the representation. This can reduce the interference between the drawn representation and the nozzle removing from the representation, stably forming a pattern.

The direction away from a drawing surface for the representation may be any direction crossing the drawing surface, i.e., any direction not parallel to the drawing surface. In removing the nozzle from the representation, the nozzle is preferably moved in a direction forming an angle of 0° or greater and 45° or smaller to the direction perpendicular to the drawing surface for the representation, more preferably moved in a direction forming an angle of 0° or greater and 30° or smaller to the direction perpendicular to the drawing surface for the representation, still more preferably moved in the perpendicular direction (including a substantially perpendicular direction). This can more effectively reduce the interference between the drawn representation and the nozzle removing from the representation.

In removing the nozzle from the representation, the nozzle is preferably removed to a gaseous phase outside the liquid. This enables more stable formation of a pattern.

A specific example of the first control processing step is controlling a nozzle as in the first drawing method illustrated in FIGS. 1A to 1D.

The second control processing step causes the nozzle to discharge the liquid material into a liquid with a tip portion of the nozzle remaining at an angle of 10° or greater to a drawing surface to draw a representation. This can reduce the interference between the representation and the nozzle during drawing of the representation, stably forming a pattern.

In drawing the representation, the angle at which the tip portion of the nozzle remains to the drawing surface is preferably 20° or greater, still more preferably 30° or greater. This enables more stable formation of a pattern.

In drawing the representation, the angle at which the tip portion of the nozzle remains to the drawing surface may have any upper limit that can be selected as appropriate, and is preferably 90° or smaller, more preferably 80° or smaller, still more preferably 70° or smaller.

In drawing the representation, the angle at which the tip portion of the nozzle remains to the drawing surface preferably falls within a range of 10° to 90°, 20° to 80°, or 30° to 70°, for example.

The nozzle may have any shape at least such that the tip portion forms the above angle. For example, the nozzle may have a linear shape as a whole, or may have a shape including a linear portion excluding the tip portion and the tip portion linearly or curvilinearly folded from an end of the linear portion. In the former case, the nozzle preferably satisfies the above angle as a whole. In the latter case, the linear portion may form any angle to the drawing surface for the representation, such as 0° or greater and smaller than 10°.

A specific example of the second control processing step is controlling a nozzle as in the second drawing method illustrated in FIGS. 2A to 2C.

The third control processing step causes the nozzle to discharge the liquid material into a liquid to draw a first line, and causes the nozzle to discharge the liquid material into the liquid on a drawing surface apart from a drawing surface for the first line to draw a second line. This can reduce the interference between the first line and the nozzle during drawing of the second line, stably forming a pattern.

In the third control processing step, a target pattern of the first line and the second line can be visually confirmed when observed in a direction that crosses (or may be perpendicular to) the drawing surface for the first line and the drawing surface for the second line. The drawing surface for the first line and the drawing surface for the second line preferably overlap each other while leaving a gap therebetween. The drawing surface for the first line may include a plurality of the first lines drawn thereon. Similarly, the drawing surface for the second line may include a plurality of the second lines drawn thereon.

The gap between the drawing surface for the first line and the drawing surface for the second line may be any size greater than 0 mm, preferably 2 mm or greater, more preferably 3 mm or greater. This enables more stable formation of a pattern.

The upper limit of the gap between the drawing surface for the first line and the drawing surface for the second line may be any value that can be set as appropriate, and is preferably 30 mm or smaller, more preferably 20 mm or smaller, still more preferably 10 mm or smaller.

The gap between the drawing surface for the first line and the drawing surface for the second line preferably falls within a range of 2 to 30 mm, 2 to 20 mm, or 3 to 10 mm, for example.

The drawing surface for the first line and the drawing surface for the second line are preferably parallel to each other, and may be non-parallel to each other as long as they satisfy the above gap.

The drawing surface for the first line and the drawing surface for the second line are each commonly a flat surface. Alternatively, each of these may be a curved surface such as a spherical surface, or one of these may be a flat surface while the other may be a curved surface.

A specific example of the third control processing step is controlling a nozzle as in the third drawing method illustrated in FIGS. 3A to 3F.

The third control processing step may cause the nozzle to discharge the liquid material into a liquid to draw a first line, and may then cause the nozzle to discharge the liquid material into the liquid to draw a second line so as to three-dimensionally cross the first line, i.e., to cross the first line while leaving a gap between the first line and the second line.

The fourth control processing step causes the nozzle to discharge the liquid material into a liquid to draw a plurality of parallel adjacent lines and thereby draw a planar representation. This enables stable formation of a planar pattern.

The plurality of lines may be linear lines or may be curved lines. The plurality of lines may have the same length, or at least one line may differ in length from the other lines.

A specific example of the fourth control processing step is controlling a nozzle as in the fourth drawing method illustrated in FIGS. 4A to 4E.

In the fourth control processing step, as illustrated in FIG. 4B to FIG. 4D, a plurality of lines may be drawn with a so-called single stroke, or may be drawn such that, after a line is drawn, the nozzle is moved to a position adjacent to the starting point (or may be a point between the starting point and the end point) of this line and then caused to start drawing a next line. These control processing steps may be combined with each other.

The fifth control processing step causes the nozzle to discharge the liquid material into a liquid to draw a dot or a line, and moves the nozzle without discharging the liquid material through the nozzle to cause the nozzle to extend the liquid material defining the dot or line and thereby draw a planar representation. This enables stable formation of a planar pattern.

The line before extension is commonly a linear line, and may be a curved line such as an arc.

Non-limiting examples of the planar shape of the planar representation include polygonal shapes, e.g., a rectangular shape, a circular shape, an elliptic shape, and a teardrop shape in the case of extending a dot, as well as a rectangular shape in the case of extending a line.

A specific example of the fifth control processing step is controlling a nozzle as in the fifth drawing method illustrated in FIGS. 5A to 5D or FIGS. 6A to 6E.

The pattern-forming liquid material contained in the tank may be delivered to the nozzle through a liquid delivery tube. The tank may be any container that can contain the pattern-forming liquid material. The tank may be separated from the pump and nozzle or may be integrated with the pump and nozzle. Multiple tanks may be provided in accordance with the types of the pattern-forming liquid materials.

The nozzle and discharge flow rate therethrough, the moving speed, the acceleration rate, and the like are as described for the production method according to the first aspect. The nozzle may be coupled with a piezoelectric element, for example. Applying voltage to this piezoelectric element can change the pressure inside the nozzle, thereby controlling the discharge flow rate of the pattern-forming liquid material through the nozzle.

The pump may be any pump that can deliver the pattern-forming liquid material to the nozzle, such as a syringe pump or a peristaltic pump.

The controller may be provided with a multi-axial mechanism (e.g., a mechanism having three or more and eight or less axes) coupled with the nozzle and configured to move the position of the nozzle. This controller can control the nozzle along multiple axes and move the nozzle three-dimensionally, i.e., form a 3D pattern easily. Examples of the multi-axial mechanism to be used include a gantry system (e.g., three axes) and a robot arm (e.g., eight axes).

To control the discharge flow rate of the pattern-forming liquid material, the controller may control the pump pressure or may control the voltage applied to the piezoelectric element provided at the nozzle portion.

The controller may be further provided with an angle-control mechanism that is coupled with the nozzle and is configured to change the angle (orientation) thereof. This enables flexible change of the angle of the nozzle.

The controller may be further provided with a control processor that executes control-processing of components such as the nozzle, the pump, and the multi-axial mechanism. The control processor may include, for example, a software program to execute a variety of processing operations such as control-processing, a central processing unit (CPU) to execute the software program, and a variety of hardware devices (e.g., memory) controlled by the CPU. The software program (e.g., control program using 3D-CAD data) and data for operating the control processor are stored in the memory.

The control processor may be provided together with the multi-axial mechanism at a place where a pattern-containing liquid is to be produced (e.g., in the same store). Alternatively, an element related to at least one function of the control processor may be separately provided at a place different from the production site for a pattern-containing liquid (e.g., in the cloud).

The production device according to the third aspect may further include a stage that can bear a container containing a liquid, and the stage may be movably arranged. The controller may allow the nozzle to discharge the pattern-forming liquid material into a liquid while moving not only the nozzle but also the stage, i.e., the liquid contained in a container.

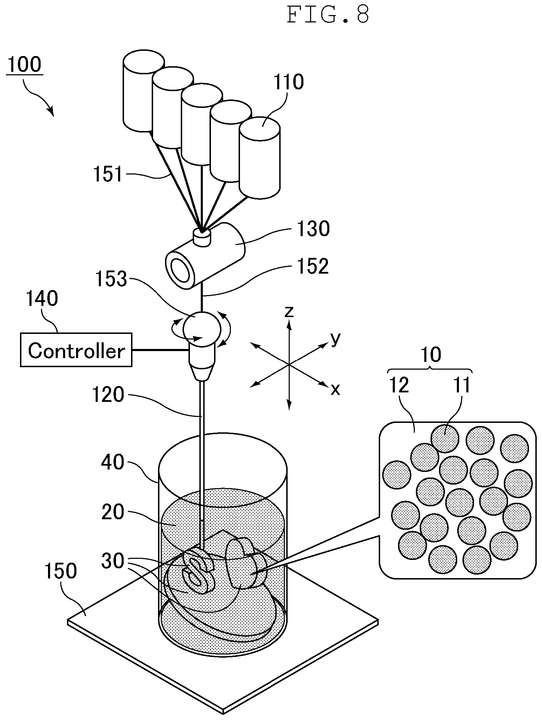

FIG. 8 is a conceptual diagram of a device for producing a pattern-containing liquid according to the present invention in which a pattern is formed in a liquid. A device 100 for producing a pattern-containing liquid shown in FIG. 8 includes: multiple tanks 110 each containing a pattern-forming liquid material 10 (e.g., a microparticle-dispersed material in which microparticles 11 are dispersed in a first liquid 12); a nozzle 120 configured to discharge the pattern-forming liquid material 10; a pump 130 configured to deliver the pattern-forming liquid material 10 to the nozzle 120; a controller 140 provided with an angle-control mechanism 153 configured to change the angle (orientation) of the nozzle 120; a stage 150 configured to bear a container 40 containing a liquid 20 (e.g., a second liquid); liquid delivery tubes 151 that connect the tanks 110 and the pump 130; and a liquid delivery tube 152 that connects the pump 130 and the nozzle 120. The controller 140 is configured to control the position and angle of the nozzle 120 and the discharge flow rate of the pattern-forming liquid material 10 to be discharged through the nozzle 120. The angle-control mechanism 153 includes a ball-shaped member that is rotatable in at least the up-down and left-right directions and can flexibly change the tilt of the nozzle 120 under the control of the controller 140. The production device 100 can automatically form a pattern 30 of the pattern-forming liquid material 10 (e.g., the microparticles 11) in the liquid 20. The tanks 110 may contain multiple, different types of pattern-forming liquid materials 10, and such multiple types of pattern-forming liquid materials 10 may be discharged through the nozzle 120 simultaneously or successively. The production device 100 may include multiple nozzles 120, and the multiple nozzles 120 may discharge multiple types of pattern-forming liquid materials 10 simultaneously or successively.

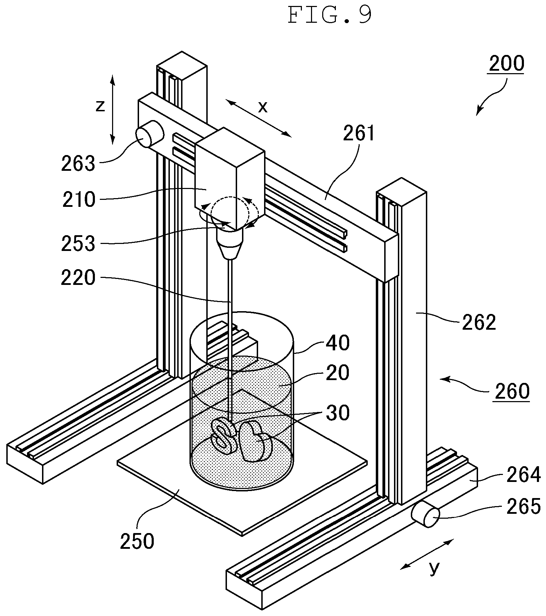

FIG. 9 is a conceptual diagram of a device for producing a pattern-containing liquid according to the present invention in which a gantry system is used. A device 200 for producing a pattern-containing liquid shown in FIG. 9 includes: a tank 210 containing a pattern-forming liquid material (not shown; e.g., a microparticle-dispersed material in which microparticles are dispersed in a first liquid); a nozzle 220 configured to discharge the pattern-forming liquid material; a stage 250 configured to bear a container 40 containing a liquid 20 (e.g., a second liquid); a gantry system 260 serving as a multi-axial mechanism of a controller (not shown); and an angle-control mechanism 253 of the controller, the mechanism being configured to change the angle (orientation) of the nozzle 220. The angle-control mechanism 253 includes a ball-shaped member that is rotatable in at least the up-down and left-right directions and can flexibly change the tilt of the nozzle 220 under the control of the controller. The tank 210 is integrated with a pump (not shown) configured to deliver the pattern-forming liquid material to the nozzle 220 and an x-axial drive motor (not shown) of the gantry system 260. The gantry system 260 is a triaxial drive mechanism, and includes an x-axial rail 261 that supports the tank 210 movably along the x axis, z-axial rails 262 that support the x-axial rail 261 movably along the z axis, a z-axial drive motor 263 configured to drive the x-axial rail 261 supported by the z-axial rails 262 along the z axis, y-axial rails 264 that support the respective z-axial rails 262 movably along the y axis, and a y-axial drive motor 265 configured to drive the z-axial rails 262 supported by the respective y-axial rails 264 along the y axis. Under the control by the controller, the system can flexibly move the nozzle 220 along the three axes. The controller is configured to control the position of the nozzle 220 by use of the gantry system 260, control the angle of the nozzle 220 with the angle-control mechanism 253, and control the discharge flow rate of the pattern-forming liquid material to be discharged through the nozzle 220. The production device 200 can also automatically form a pattern 30 of the pattern-forming liquid material (e.g., the microparticles) in the liquid 20.

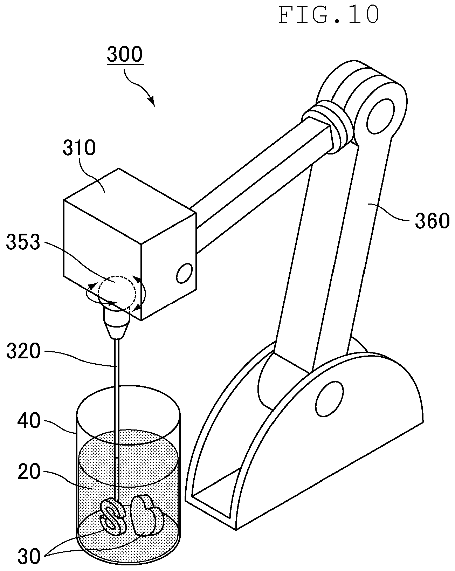

FIG. 10 is a conceptual diagram of a device for producing a pattern-containing liquid according to the present invention in which a robot arm is used. A device 300 for producing a pattern-containing liquid shown in FIG. 10 includes: a tank 310 containing a pattern-forming liquid material (not shown; e.g., a microparticle-dispersed material in which microparticles are dispersed in a first liquid); a nozzle 320 configured to discharge the pattern-forming liquid material; a robot arm 360 serving as a multi-axial mechanism of a controller (not shown); and an angle-control mechanism 353 of the controller, the mechanism being configured to change the angle (orientation) of the nozzle 320. The angle-control mechanism 353 includes a ball-shaped member that is rotatable in at least the up-down and left-right directions and can flexibly change the tilt of the nozzle 320 under the control of the controller. The tank 310 is integrated with a pump (not shown) configured to deliver the pattern-forming liquid material to the nozzle 320. The robot arm 360 is, for example, an eight-axial drive mechanism and can flexibly move the nozzle 320 along the eight axes under the control by the controller. The controller is configured to control the position of the nozzle 320 by use of the robot arm 360, control the angle of the nozzle 320 with the angle-control mechanism 353, and control the discharge flow rate of the pattern-forming liquid material to be discharged through the nozzle 320. The production device 300 can also automatically form a pattern 30 of the pattern-forming liquid material (e.g., the microparticles) in the liquid 20.

<Software>

Next, software according to a fourth aspect of the present invention (hereinafter, also simply referred to as software according to the fourth aspect) is described below. The features common to the production method according to the first aspect and the production device according to the third aspect are applicable to the software according to the fourth aspect and are therefore not elaborated hereinbelow.

The software according to the fourth aspect operates in a device for producing a pattern-containing liquid including a tank configured to contain a pattern-forming liquid material, a nozzle configured to discharge the liquid material, a pump configured to deliver the liquid material to the nozzle, and a controller configured to control the position of the nozzle and the discharge flow rate of the liquid material discharged through the nozzle.

The device for producing a pattern-containing liquid in which the software according to the fourth aspect operates may exclude at least one of the tank, the nozzle, or the pump.

The software according to the fourth aspect causes the controller to execute at least one of the first to fifth control processing steps. This allows the device for producing a pattern-containing liquid to produce a pattern-containing liquid with a high flexibility in design of a pattern in a liquid.

The control processing steps executed by the controller via the software according to the fourth aspect are the same as the control processing steps described for the production device according to the third aspect.

The software according to the fourth aspect may be installed in advance in the controller (in particular, the control processing unit), or may be prepared as an application program operable on a general purpose OS and may be provided to a user in the form of a record in a computer-readable storage medium or via a network.

The numerical ranges represented by the lower limit and the upper limit, i.e., "lower limit to upper limit", herein include the lower limit and the upper limit. For example, the range represented by "1 to 2" means 1 or greater and 2 or smaller, including 1 and 2. The upper limits and the lower limits herein may be used in any combination to form a range.

The academic literature and patent literature mentioned herein are incorporated herein by reference.

The present invention is described in more detail below with reference to examples. For convenience of description, the examples described below include reference examples, which do not completely correspond to the present invention, and comparative examples relative to the present invention. The present invention is not limited to these examples.

<Reference Example 1>

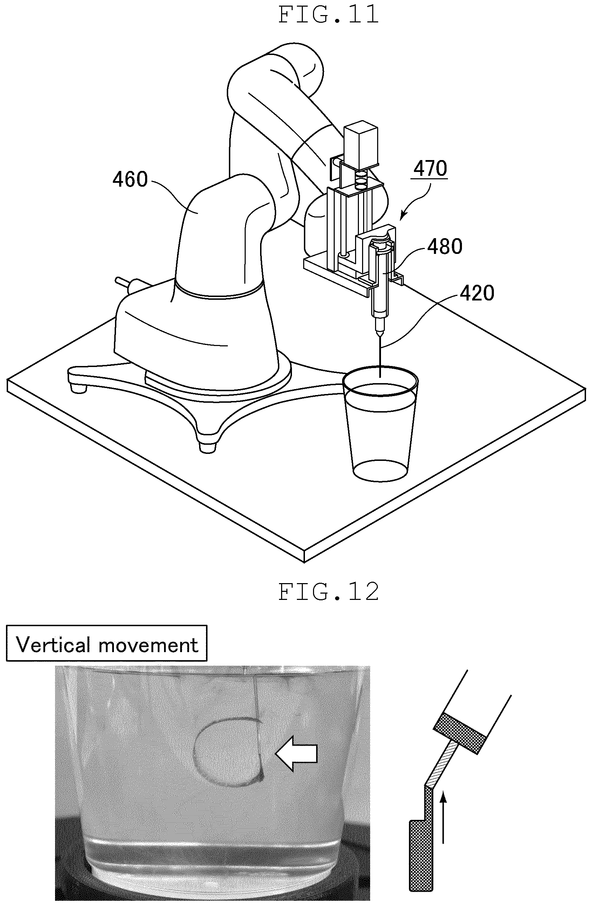

To produce a pattern-containing liquid, the following device prototype was formed. FIG. 11 is a schematic perspective view of the device prototype in Reference Example 1 for producing a pattern-containing liquid.

As shown in FIG. 11, a human collaborative robot 460, COBOTTA (Denso Wave Inc.) was equipped at its arm end with a syringe push system 470 including a stepping motor and a lead screw. This syringe push system 470 was designed to be pushed at various rates according to the external input. The syringe push system 470 is compatible with syringes of various sizes; the device used in the following examples was provided with, as a syringe 480, a plunger 1010TLL (capacity: 10 mL, Hamilton, USA) equipped with N727 pst-3 (inner diameter: 0.21 mm) as a nozzle 420. The maximum discharge flow rate (maximum discharge rate) was from 0 to 200 mL/s. The maximum nozzle speed was 150 mm/s and the minimum nozzle speed was 0.15 mm/s. With the nozzle speed being defined as $\alpha$ mm/s, the nozzle acceleration was at most $\alpha$ mm/s$^2$ and at least 0.000001 mm/s$^2$.

Unless otherwise mentioned, the nozzle speed during drawing was 10 mm/s, the nozzle acceleration during drawing was 2 mm/s$^2$, the nozzle speed from a representation (line) to a next representation (line) was 90 mm/s, and the nozzle acceleration from a representation (line) to a next representation (line) was 18 mm/s$^2$. The discharge flow rate of the ink during drawing was 0.3 $\mu$L/s. Drawing was performed with a 250 mL fluid sample, serving as a drawing target, in a 10 ounce cup. A pattern was drawn so as to be within a 45-mm square.

<Example 1>

The above device was used to produce a pattern-containing liquid that is meaningful when observed from a side of the container.

In the present pattern drawing, ink was prepared by suspending an aqueous suspension of 1-um-diameter polystyrene microparticles (Polystyrene Red Dyed Microsphere 1.00 $\mu$m, density 1.05 g/mL, Polysciences Inc.) in a glycerol aqueous solution having a final concentration of 20% by weight such that the suspension had a final concentration of 1% by weight. This ink had a viscosity (25°C) of 2 mP·s and a density of 1.05 g/mL. Separately, a liquid to serve as a drawing target was prepared by suspending carboxymethyl cellulose (TFo-10002, Sugino Machine Ltd.) in a glycerol aqueous solution having a final concentration of 20% by weight such that the suspension had a final concentration of 0.2% by weight. This liquid to serve as a drawing target had a viscosity (25°C) of 8 mP·s and a density of 1.05 g/mL.

The viscosity (25°C) was measured using a tuning fork vibro viscometer SV-10 available from A&D Co., Ltd. The density was measured using a density meter DMA 4500 M (Anton Paar GmbH).

FIG. 12 includes a photograph and schematic diagram of a pattern drawn in Comparative Example 1 corresponding to Example 1; the left is a photograph of the pattern observed from a side of a container (with the drawing surface observed from the front), and the right is a schematic diagram of the pattern observed in the direction parallel to the drawing surface.

As illustrated in FIG. 12, the ink was used to draw, in the liquid to serve as a drawing target, a pattern that looks like "C" when observed from a side of the container, and the nozzle was moved for removal in a direction parallel to the drawing surface for the pattern (vertical direction). In this case, the nozzle and the ink interfered with each other, disturbing the pattern (left of FIG. 12).

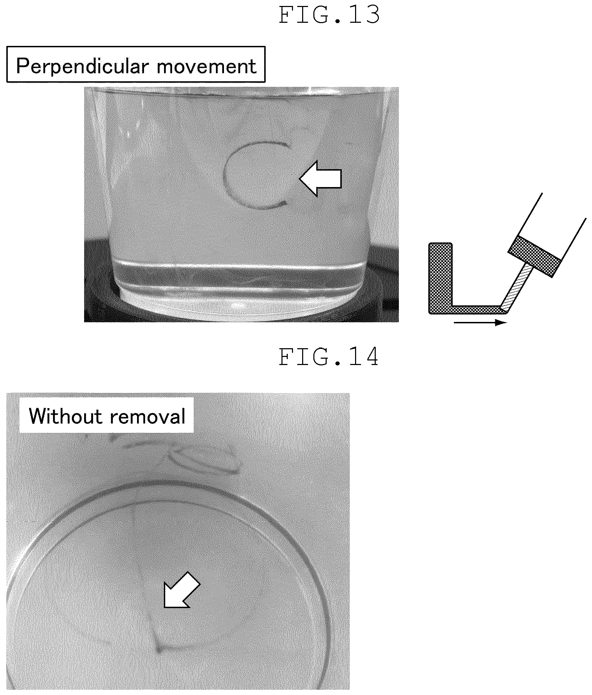

FIG. 13 includes a photograph and schematic diagram of a pattern drawn in Example 1; the left is a photograph of the pattern observed from a side of a container (with the drawing surface observed from the front), and the right is a schematic diagram of the pattern observed in the direction parallel to the drawing surface.

Thus, as illustrated in FIG. 13, with the direction of removing the nozzle after drawing a pattern being changed to the direction perpendicular to the drawing surface, a pattern was drawn as in the first drawing method illustrated in FIG. 1. In this case, the pattern maintained its shape (left of FIG. 13). Then, drawing was performed at an angle from 0° (corresponding to the perpendicular direction) to 90° (corresponding to the vertical direction). At angles 0°, 15°, 30°, and 45°, the nozzle movement influenced on the pattern end and resultantly the line thickness expanded respectively by 13%, 21%, 39%, and 46% the original line thickness. Further, the line thickness greatly expanded by 91% at 60° and 120% at 90°. These results demonstrate that the pattern maintained its shape at an angle of 45° or smaller. These results also demonstrate that, after a pattern is formed in a liquid, removing the nozzle in a direction away from the drawing surface for the pattern, preferably the direction perpendicular to the drawing surface for the pattern, enables stable formation of a pattern.

<Example 2>

The above device was used to produce a pattern-containing liquid that is meaningful when observed from the top of the liquid.

In the present pattern drawing, ink was prepared by suspending an aqueous suspension of 1-um-diameter polystyrene microparticles (Polystyrene Red Dyed Microsphere 1.00 $\mu$m, density 1.05 g/mL, Polysciences Inc.) in a glycerol aqueous solution having a final concentration of 20% by weight such that the suspension had a final concentration of 1% by weight. This ink had a viscosity (25°C) of 2 mP·s and a density of 1.05 g/mL. Separately, a liquid to serve as a drawing target was prepared by suspending carboxymethyl cellulose (TFo-10002, Sugino Machine Ltd.) in a glycerol aqueous solution having a final concentration of 20% by weight such that the suspension had a final concentration of 0.5% by weight. This liquid to serve as a drawing target had a viscosity (25°C) of 17 mP·s and a density of 1.05 g/mL.

The viscosity (25°C) and the density were determined as in Example 1.

FIG. 14 is a photograph of a pattern drawn in Comparative Example 2 corresponding to Example 2, showing the pattern observed from the top of the liquid (with the drawing surface observed from the front).

As illustrated in FIG. 14, the ink was used to draw, in the liquid to serve as a drawing target, a pattern that looks like a "fruit", specifically an "apple", when observed from the top of the liquid. When the nozzle was moved in a direction parallel to the drawing surface for the pattern, the nozzle and the ink interfered with each other, disturbing the pattern.

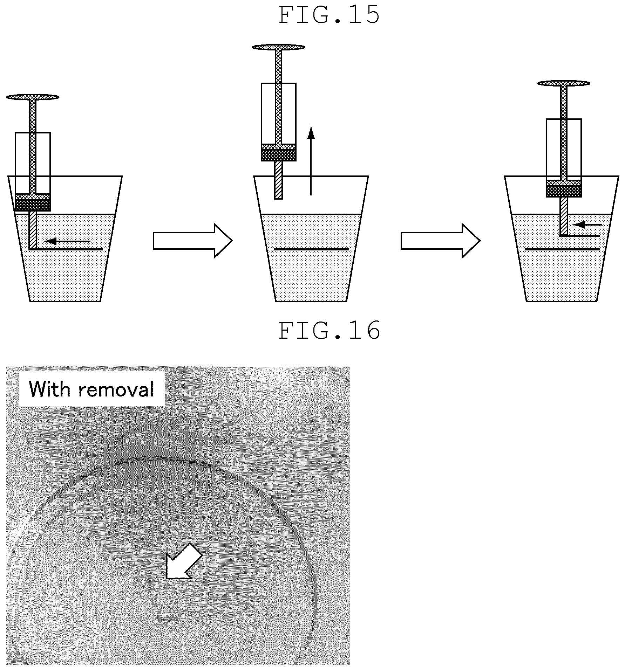

FIG. 15 is a schematic diagram of a method of drawing a pattern in Example 2. FIG. 16 is a photograph of a pattern drawn in Example 2, showing the pattern observed from the top of the liquid (with the drawing surface observed from the front).

In contrast, as illustrated in FIG. 15, with the direction of removing the nozzle after drawing a pattern being changed to the direction perpendicular to the drawing surface, a pattern was drawn as in the first drawing method illustrated in FIG. 1. After the initial line was drawn, the nozzle was withdrawn from water to the gaseous phase (the air) and moved to the position where the next line was to be drawn, forming a pattern. This can resultantly reduce disturbance of the pattern as illustrated in FIG. 16. These results demonstrate that, after a pattern is formed in a liquid, removing the nozzle in a direction away from the drawing surface for the pattern (preferably the perpendicular direction) and withdrawing the nozzle from water enable stable formation of a pattern.

<Example 3>

In producing a pattern-containing liquid that is meaningful when observed from a side of the container using the above device, the contact angle between the nozzle and the drawing surface was examined.

In the present pattern drawing, ink was prepared by suspending an aqueous suspension of 1-um-diameter polystyrene microparticles (Polystyrene Red Dyed Microsphere 1.00 $\mu$m, density 1.05 g/mL, Polysciences Inc.) in a glycerol aqueous solution having a final concentration of 20% by weight such that the suspension had a final concentration of 1% by weight. This ink had a viscosity (25°C) of 2 mP·s and a density of 1.05 g/mL. Separately, a liquid to serve as a drawing target was prepared by suspending carboxymethyl cellulose (TFo-10002, Sugino Machine Ltd.) in a glycerol aqueous solution having a final concentration of 20% by weight such that the suspension had a final concentration of 0.2% by weight. This liquid to serve as a drawing target had a viscosity (25°C) of 8 mP·s and a density of 1.05 g/mL.

The viscosity (25°C) and the density were determined as in Example 1.

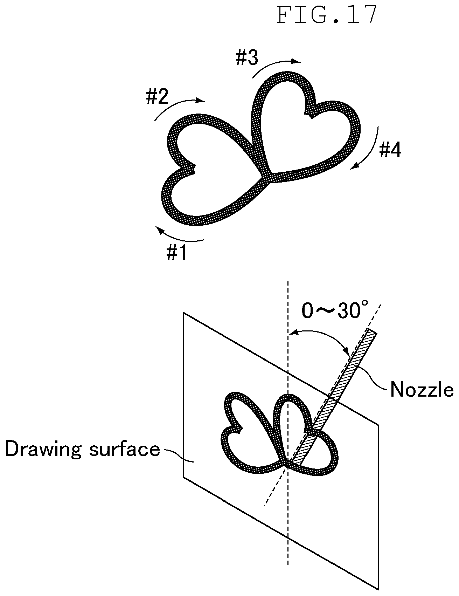

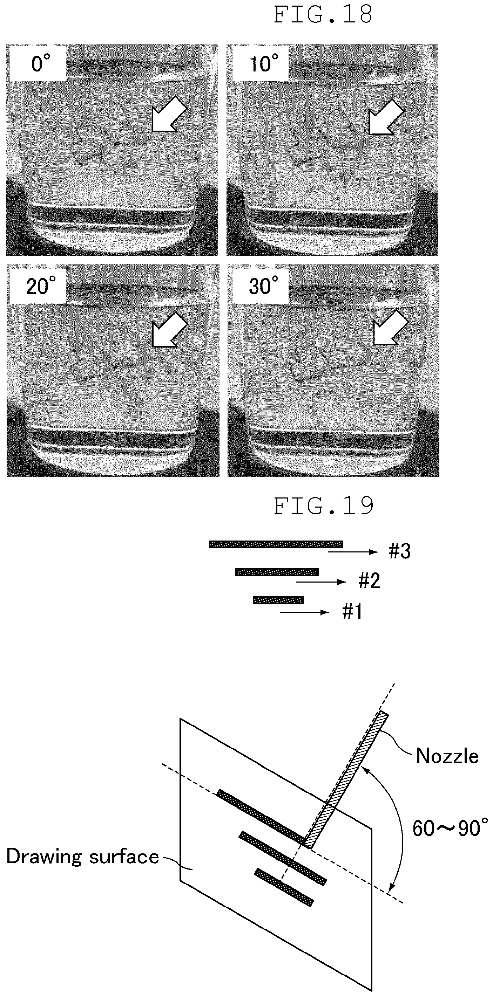

FIG. 17 includes schematic diagrams of a method of drawing a pattern in Example 3 and in Comparative Example 3 corresponding thereto; the top is a schematic diagram of the pattern with the drawing surface observed from the front, and the bottom is a schematic diagram of the pattern with the drawing surface observed diagonally. FIG. 18 includes photographs of patterns drawn in Example 3 and in Comparative Example 3 corresponding thereto, showing the patterns observed from a side of a container (with the drawing surfaces observed from the front).

As illustrated in FIG. 17, the ink was used to draw, in the liquid to serve as a drawing target, a pattern that looks like a "heart" when observed from a side of the container. When the nozzle was moved at an angle of 0° relative to the drawing surface for the pattern, the nozzle and the ink that had been discharged in the liquid serving as the drawing target interfered with each other, disturbing the pattern (see FIG. 18, 0°). Then, with the angle between the drawing surface and the nozzle during pattern drawing being changed from 10° to 30°, a pattern was drawn as in the second drawing method illustrated in FIGS. 2A to 2C. In this case, the nozzle and the ink that had been discharged in the liquid serving as the drawing target did not interfere with each other, successfully resulting in drawing of a heart shape (see FIG. 18, 10°, 20°, and 30°). These results demonstrate that setting the nozzle at an angle of 10° or greater relative to the drawing surface for the pattern in forming a pattern in a liquid enables stable formation of a pattern.

<Example 4>

In producing a pattern-containing liquid that is meaningful when observed from the top of the liquid using the above device, the contact angle between the nozzle and the drawing surface was examined.

In the present pattern drawing, ink was prepared by suspending an aqueous suspension of 1-um-diameter polystyrene microparticles (Polystyrene Red Dyed Microsphere 1.00 $\mu$m, density 1.05 g/mL, Polysciences Inc.) in a glycerol aqueous solution having a final concentration of 20% by weight such that the suspension had a final concentration of 1% by weight. This ink had a viscosity (25°C) of 2 mP·s and a density of 1.05 g/mL. Separately, a liquid to serve as a drawing target was prepared by suspending carboxymethyl cellulose (TFo-10002, Sugino Machine Ltd.) in a glycerol aqueous solution having a final concentration of 20% by weight such that the suspension had a final concentration of 0.5% by weight. This liquid to serve as a drawing target had a viscosity (25°C) of 17 mP·s and a density of 1.05 g/mL.

The viscosity (25°C) and the density were determined as in Example 1.

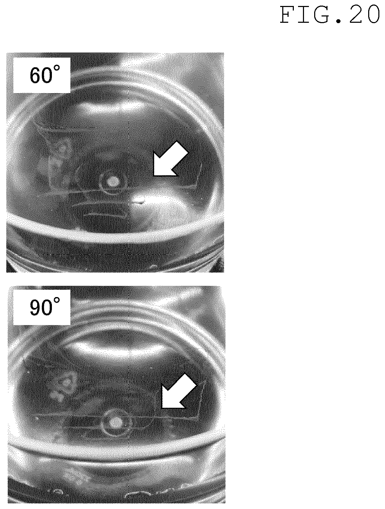

FIG. 19 includes schematic diagrams of a method of drawing a pattern in Example 4; the top is a schematic diagram of the pattern with the drawing surface observed from the front, and the bottom is a schematic diagram of the pattern with the drawing surface observed diagonally. FIG. 20 includes photographs of patterns drawn in Example 4, showing the patterns observed from the top of the liquid (with the drawing surfaces observed from the front).

As illustrated in FIG. 19, the ink was used to draw, in the liquid to serve as a drawing target, a pattern that looks like a triple bar "≡" when observed from the top of the liquid. When the angle between the drawing surface for the pattern and the nozzle was 60° or 90° as in the second drawing method illustrated in FIGS. 2A to 2C, the nozzle and the ink that had been discharged in the liquid serving as the drawing target did not interfere with each other, successfully resulting in drawing of a target pattern (see FIG. 20, 60° and 90°). These results are not inconsistent with the results of Example 3 and demonstrate that setting the nozzle at an angle of 10° or greater relative to the drawing surface for the pattern in forming a pattern in a liquid enables stable formation of a pattern.

<Example 5>

In producing a pattern-containing liquid that is meaningful when observed from a side of the container using the above device, reduction of disturbance generated due to crossing of lines was examined.

In the present pattern drawing, ink was prepared by suspending an aqueous suspension of 1-um-diameter polystyrene microparticles (Polystyrene Red Dyed Microsphere 1.00 $\mu$m, density 1.05 g/mL, Polysciences Inc.) in a glycerol aqueous solution having a final concentration of 20% by weight such that the suspension had a final concentration of 1% by weight. This ink had a viscosity (25°C) of 2 mP·s and a density of 1.05 g/mL. Separately, a liquid to serve as a drawing target was prepared by suspending carboxymethyl cellulose (TFo-10002, Sugino Machine Ltd.) in a glycerol aqueous solution having a final concentration of 20% by weight such that the suspension had a final concentration of 0.2% by weight. This liquid to serve as a drawing target had a viscosity (25°C) of 8 mP·s and a density of 1.05 g/mL.

The viscosity (25°C) and the density were determined as in Example 1.

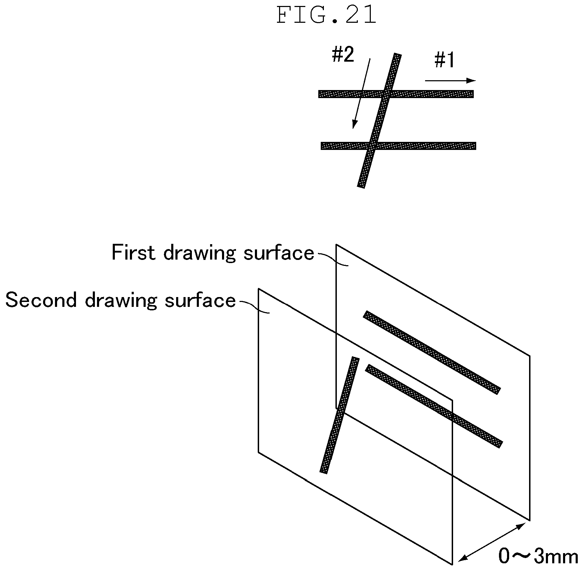

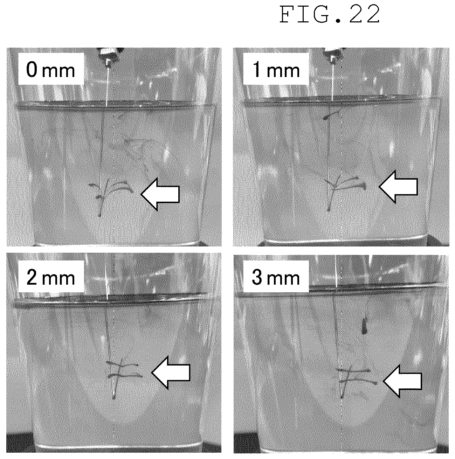

FIG. 21 includes schematic diagrams of a method of drawing a pattern in Example 5 and in Comparative Example 4 corresponding thereto; the top is a schematic diagram of the pattern with the drawing surface observed from the front, and the bottom is a schematic diagram of the pattern with the drawing surface observed diagonally. FIG. 22 includes photographs of patterns drawn in Example 5 and in Comparative Example 4 corresponding thereto, showing the patterns observed from a side of a container (with the drawing surfaces observed from the front).

As illustrated in FIG. 21, the ink was used to draw, in the liquid to serve as a drawing target, a pattern that looks like "≠" when observed from a side of the container. When the nozzle was moved on the same and single drawing surface for the pattern, the nozzle and the ink that had been discharged in the liquid serving as the drawing target interfered with each other, disturbing the pattern (see FIG. 22, 0 mm). Then, as in the third drawing method illustrated in FIGS. 3A to 3F, drawing was performed such that the drawing surface on which the pattern that looks like "=" was drawn and the drawing surface on which the pattern that looks like "/" was drawn were apart from each other by 1 to 3 mm. As a result, the nozzle and the ink that had been discharged in the liquid serving as the drawing target did not interfere with each other, successfully resulting in drawing of the "≠" shape (see FIG. 22, 1 mm, 2 mm, and 3 mm). These results demonstrate that separating, preferably by 1 mm or greater, the drawing surfaces for crossed components of a pattern in forming a crossed pattern in a liquid enables stable formation of a pattern.

<Example 6>

In producing a pattern-containing liquid that is meaningful when observed from the top of the liquid using the above device, reduction of disturbance generated due to crossing of lines was examined.

In the present pattern drawing, ink was prepared by suspending an aqueous suspension of 1-um-diameter polystyrene microparticles (Polystyrene Red Dyed Microsphere 1.00 $\mu$m, density 1.05 g/mL, Polysciences Inc.) in a glycerol aqueous solution having a final concentration of 20% by weight such that the suspension had a final concentration of 1% by weight. This ink had a viscosity (25°C) of 2 mP·s and a density of 1.05 g/mL. Separately, a liquid to serve as a drawing target was prepared by suspending carboxymethyl cellulose (TFo-10002, Sugino Machine Ltd.) in a glycerol aqueous solution having a final concentration of 20% by weight such that the suspension had a final concentration of 0.5% by weight. This liquid to serve as a drawing target had a viscosity (25°C) of 17 mP·s and a density of 1.05 g/mL.

The viscosity (25°C) and the density were determined as in Example 1.

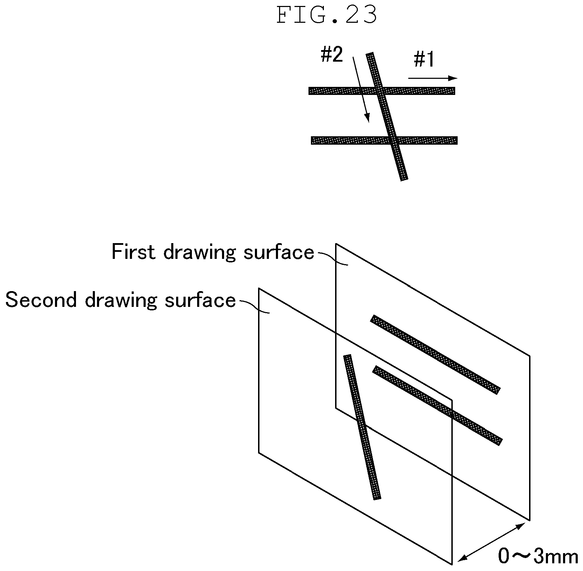

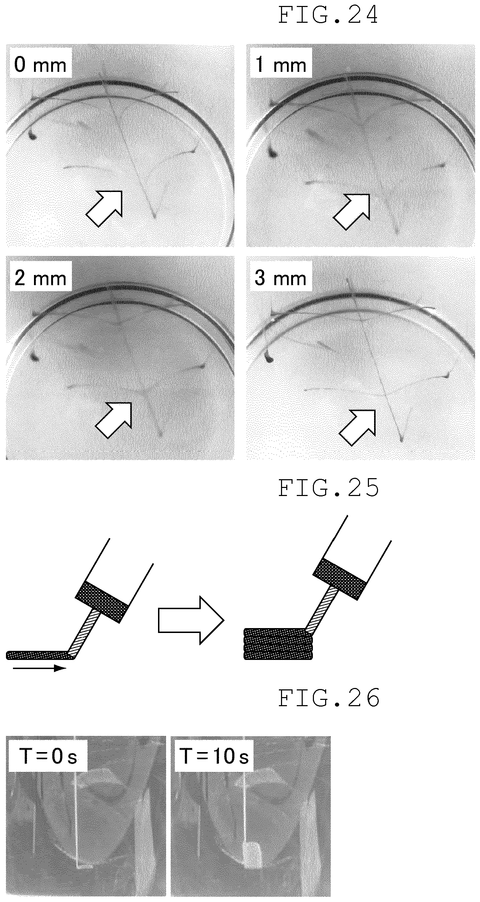

FIG. 23 includes schematic diagrams of a method of drawing a pattern in Example 6 and in Comparative Example 5 corresponding thereto; the top is a schematic diagram of the pattern with the drawing surface observed from the front, and the bottom is a schematic diagram of the pattern with the drawing surface observed diagonally. FIG. 24 includes photographs of patterns drawn in Example 6 and in Comparative Example 5 corresponding thereto, showing the patterns observed from the top of the liquid (with the drawing surfaces observed from the front).

As illustrated in FIG. 23, the ink was used to draw, in the liquid to serve as a drawing target, a pattern that looks like "≠" when observed from the top of the liquid. When the drawing surfaces for crossed components of a pattern are apart from each other by 1 to 3 mm as in Example 5 (i.e., the third drawing method illustrated in FIGS. 3A to 3F), the nozzle and the ink that had been discharged in the liquid serving as the drawing target did not interfere with each other, successfully resulting in drawing of a target pattern (see FIG. 24, 1 mm, 2 mm, and 3 mm). On the other hand, when a pattern was drawn while the nozzle was moved on the same and single drawing surface for the pattern, the nozzle and the ink that had been discharged in the liquid serving as the drawing target interfered with each other, disturbing the pattern (see FIG. 24, 0 mm). This result also demonstrates that separating (preferably by 2 mm or greater) the drawing surfaces for crossed components of a pattern in forming a crossed pattern in a liquid enables stable formation of a pattern.

<Example 7>

In producing a pattern-containing liquid that is meaningful when observed from a side of the container using the above device, reduction of disturbance generated due to crossing of lines was examined.

In the present pattern drawing, ink was prepared by suspending an aqueous suspension of 1-um-diameter polystyrene microparticles (Polystyrene Yellow Dyed Microsphere 1.00 $\mu$m, density 1.05 g/mL, Polysciences Inc.) in a glycerol aqueous solution having a final concentration of 20% by weight such that the suspension had a final concentration of 1% by weight. This ink had a viscosity (25°C) of 2 mP·s and a density of 1.05 g/mL. Separately, a liquid to serve as a drawing target was prepared by suspending carboxymethyl cellulose (TFo-10002, Sugino Machine Ltd.) in a glycerol aqueous solution having a final concentration of 20% by weight such that the suspension had a final concentration of 0.2% by weight. This liquid to serve as a drawing target had a viscosity (25°C) of 8 mP·s and a density of 1.05 g/mL.

The viscosity (25°C) and the density were determined as in Example 1.

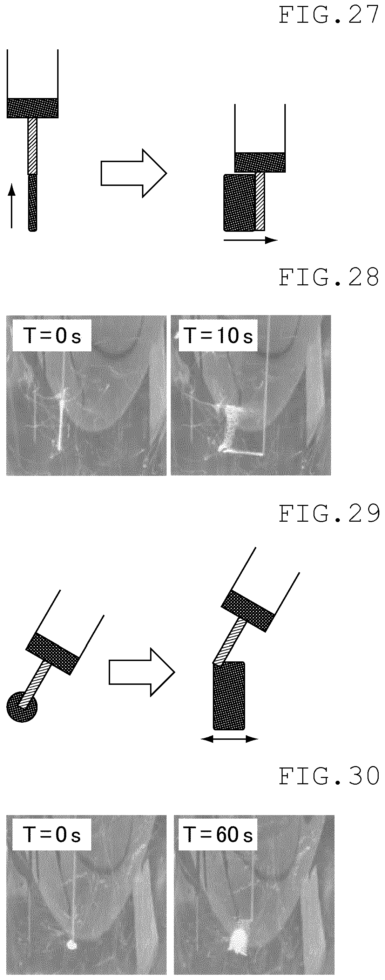

FIG. 25 is a schematic diagram of the first method of drawing a pattern in Example 7. FIG. 26 includes photographs of a pattern drawn by the first drawing method in Example 7, showing the pattern observed from a side of a container (with the drawing surface observed from the front). FIG. 27 is a schematic diagram of the second method of drawing a pattern in Example 7. FIG. 28 includes photographs of a pattern drawn by the second drawing method in Example 7, showing the pattern observed from a side of a container (with the drawing surface observed from the front). FIG. 29 is a schematic diagram of the third method of drawing a pattern in Example 7. FIG. 30 includes photographs of a pattern drawn by the third drawing method in Example 7, showing the pattern observed from a side of a container (with the drawing surface observed from the front). FIG. 26 and FIG. 28 illustrate the states of the patterns at the start of drawing (T = 0s) and 10 seconds after the start of drawing (T = 10s). FIG. 30 illustrates the states of the pattern at the start of drawing (T = 0s) and 60 seconds after the start of drawing (T = 60s).

As illustrated in FIG. 25, FIG. 27, and FIG. 29, the ink was used to draw, in the liquid to serve as a drawing target, a pattern that looks like a "rectangle" when observed from a side of the container. Successful drawing of a pattern that looks like a "rectangle" was achieved by: a method in which the nozzle is gradually moved upward so that a plane is drawn with lines as in the fourth drawing method illustrated in FIGS. 4A to 4E (see FIG. 25 and FIG. 26); a method in which a line is first drawn and then expanded with the nozzle as in the fifth drawing method (method of drawing a plane from a line) illustrated in FIGS. 6A to 6E (see FIG. 27 and FIG. 28); and a method in which a dot is first drawn and then expanded with the nozzle as in the fifth drawing method (method of drawing a plane from a dot) illustrated in FIGS. 5A to 5D (see FIG. 29 and FIG. 30). These results demonstrate that the above three methods enable stable formation of a rectangular pattern.

<Example 8>

Utilizing the methods of Examples 1, 3, and 5 (i.e., the first to third drawing methods), a complicated fish pattern was drawn in a liquid.

In the present pattern drawing, ink was prepared by suspending an aqueous suspension of 1-um-diameter polystyrene microparticles (Polystyrene Red Dyed Microsphere 1.00 $\mu$m, density 1.05 g/mL, Polysciences Inc.) in a glycerol aqueous solution having a final concentration of 20% by weight such that the suspension had a final concentration of 1% by weight. This ink had a viscosity (25°C) of 2 mP·s and a density of 1.05 g/mL. Separately, a liquid to serve as a drawing target was prepared by suspending carboxymethyl cellulose (TFo-10002, Sugino Machine Ltd.) in a glycerol aqueous solution having a final concentration of 20% by weight such that the suspension had a final concentration of 1% by weight. This liquid to serve as a drawing target had a viscosity (25°C) of 58 mP·s and a density of 1.05 g/mL. In the present drawing, the angle between the individual drawing surface and the nozzle was set to 30° and the distance between adjacent drawing surfaces was set to 3 mm.

The viscosity (25°C) and the density were determined as in Example 1.

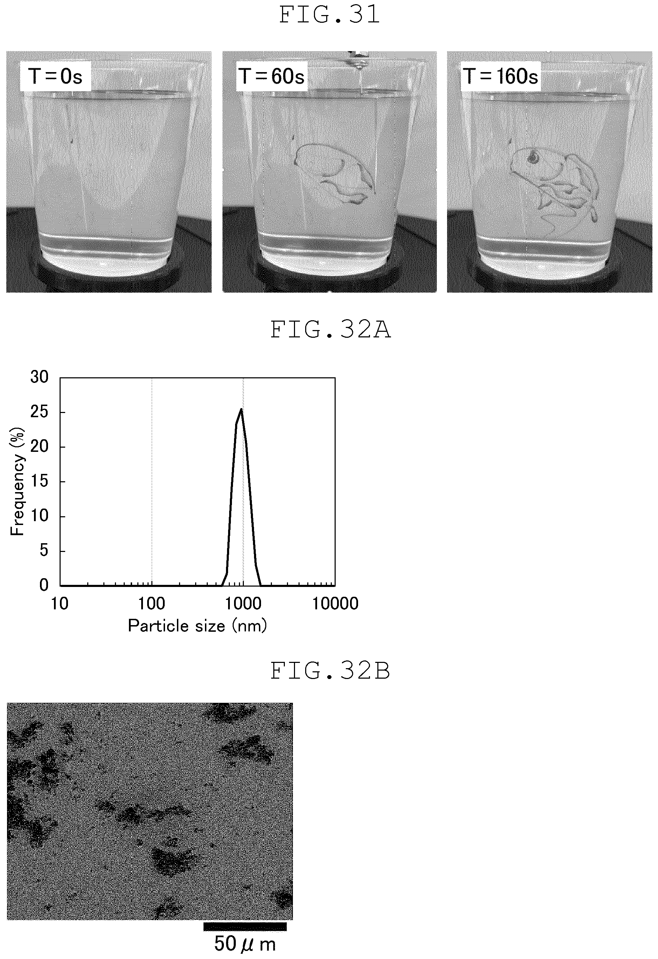

FIG. 31 includes photographs of a pattern drawn in Example 8, showing the pattern observed from a side of a container (with the drawing surface observed from the front). FIG. 31 illustrates the states of the pattern at the start of drawing (T = 0s) as well as 60 seconds and 160 seconds after the start of drawing (T = 60s and 160s).

As illustrated in FIG. 31, this successfully resulted in drawing of a picture of fish with parts such as fins and an eye being expressed in approximately 160 seconds. This result also demonstrates that the nozzle is preferably moved in the perpendicular direction after pattern formation, that the drawing surface for a pattern and the nozzle are preferably angled, and that the drawing surfaces are preferably apart from each other.

<Example 9>

Production of a pattern-containing liquid with squid ink particles, which correspond to an edible material, was examined.

First, squid ink particles were prepared and analyzed for physical properties. Specifically, squid ink paste (available from ZADES) was suspended in water to a final concentration of 20% by weight, whereby ink was prepared. This suspension of squid ink particles had a density of 1.02 g/mL and a viscosity (25°C) of 1.5 mPa·s.

The viscosity (25°C) and density of the suspension of squid ink particles were determined as in Example 1.

FIGS. 32A and 32B are those illustrating the result of analyzing the suspension of squid ink particles used in Example 9; FIG. 32A is a graph of the particle size distribution; and FIG. 32B is a micrograph.

The particle size distribution of the ink particles contained in the suspension of squid ink particles was determined using a nanoparticle analyzer (SZ-100V2, Horiba, Ltd.) to find that the average particle size was 784 nm (see FIG. 32A). The suspension was also subjected to microscopy with a 40x objective lens to find the presence of black fine particles (see FIG. 32B), which demonstrates that the suspension had a particle size suitable to favorable drawing.

Using this suspension of squid ink particles as ink and utilizing the methods of Examples 1 and 3 (i.e., the first and second drawing methods), a pattern that looks like "Love" when observed from a side of the container was drawn in the liquid to serve as a drawing target. In the present case, the liquid to serve as a drawing target was prepared by suspending carboxymethyl cellulose (TFo-10002, Sugino Machine Ltd.) in a glycerol aqueous solution having a final concentration of 8% by weight such that the suspension had a final concentration of 0.5% by weight. This liquid to serve as a drawing target had a viscosity (25°C) of 17 mP·s and a density of 1.02 g/mL. In the present drawing, the angle between the individual drawing surface and the nozzle was set to 30°.

The viscosity (25°C) and density of the liquid to serve as a drawing target were determined as in Example 1.

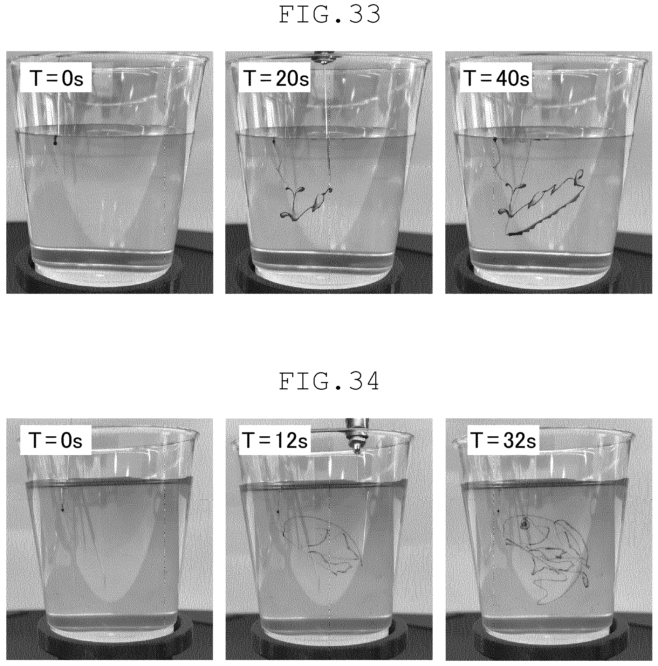

FIG. 33 includes photographs of the pattern drawn in Example 9, showing the pattern observed from a side of a container (with the drawing surface observed from the front). FIG. 33 illustrates the states of the pattern at the start of drawing (T = 0s) as well as 20 seconds and 40 seconds after the start of drawing (T = 20s and 40s).

As illustrated in FIG. 33, using the squid ink particles successfully resulted in favorable drawing of the letters "Love". This result demonstrates that selecting an appropriate particle size and an appropriate density enables favorable formation of a pattern even with naturally derived particles.

<Example 10>

Using the suspension of squid ink particles prepared in Example 9, a pattern was rapidly drawn in lemon tea.

In the present case, a liquid to serve as a drawing target was prepared by suspending carboxymethyl cellulose (TFo-10002, Sugino Machine Ltd.) to a final concentration of 0.5% by weight and glycerol to a final concentration of 2% by weight in lemon tea (Boss, available from Suntory Foods Ltd.). This liquid to serve as a drawing target had a viscosity (25°C) of 17 mP·s and a density of 1.02 g/mL.

The viscosity (25°C) and the density were determined as in Example 1.

To rapidly draw a pattern, the nozzle speed during drawing was 30 mm/s, the nozzle acceleration during drawing was 6 mm/s$^2$, the nozzle speed from a representation (line) to a next representation (line) was 90 mm/s, and the nozzle acceleration from a representation (line) to a next representation (line) was 54 mm/s$^2$. The discharge flow rate of the ink was 0.5 μL/s. In the present drawing, the angle between the individual drawing surface and the nozzle was set to 30° and the distance between adjacent drawing surfaces was set to 3 mm.

FIG. 34 includes photographs of the pattern drawn in Example 10, showing the pattern observed from a side of a container (with the drawing surface observed from the front). FIG. 34 illustrates the states of the pattern at the start of drawing (T = 0s) as well as 12 seconds and 32 seconds after the start of drawing (T = 12s or 32s).

As illustrated in FIG. 34, the present case successfully resulted in drawing of the same pattern five times as fast as that under the conditions of Example 8. This result demonstrates that forming an angle between the nozzle and the drawing surface, forming a pattern with the drawing surfaces for crossed lines being apart from each other, and removing the nozzle from the line in the perpendicular direction successfully resulted in favorable drawing of a fluid pattern in a liquid.

<Reference>

(Reference 1) The bulletin of Hachinohe Institute of Technology, 2007, Vol. 26, pp. 9-13

REFERENCE SIGNS LIST

1, 120, 220, 320, 420: nozzle
1a: tip portion
2A, 2B, 2D, 2E, 2F: drawing surface
2Ca: first drawing surface
2Cb: second drawing surface
3A, 3B: representation
3Ca, 3Da: first line
3Cb, 3Db: second line
3Dc: one or more lines
3Dd, 3Eb, 3Fb: planar representation
3De: final line
3Ea: dot
3Fa: linear line
10: pattern-forming liquid material
11: microparticles
12: first liquid
20: liquid (second liquid)
30: pattern
40: container
100, 200, 300: device for producing a pattern-containing liquid
110, 210, 310: tank
130: pump
140: controller
150, 250: stage
151, 152: liquid delivery tube
153, 253, 353: angle-control mechanism
260: gantry system
261: x-axial rail
262: z-axial rail
263: z-axial drive motor
264: y-axial rail
265: y-axial drive motor
360: robot arm
460: human collaborative robot
470: syringe push system
480: syringe

**Claims**

1. A method for producing a pattern-containing liquid, the method comprising:

   a drawing step of drawing a representation by discharging a pattern-forming liquid material into a liquid using a position-controllable nozzle; and
   after drawing the representation, a removing step of removing the nozzle from the representation by moving the nozzle in a direction away from a drawing surface for the representation without discharging the liquid material through the nozzle.

2. The method for producing a pattern-containing liquid according to claim 1, wherein, in the removing step, the nozzle is moved in a direction forming an angle of 0° or greater and 45° or smaller to a direction perpendicular to the drawing surface for the representation.

3. The method for producing a pattern-containing liquid according to claim 2, wherein, in the removing step, the nozzle is moved in the perpendicular direction.

4. The method for producing a pattern-containing liquid according to claim 1 or 2, wherein, in the removing step, the nozzle is removed to a gaseous phase outside the liquid.

5. A method for producing a pattern-containing liquid, the method comprising

    a drawing step of drawing a representation by discharging a pattern-forming liquid material into a liquid using a position-controllable nozzle, wherein, in the drawing step, the representation is drawn with a tip portion of the nozzle remaining at an angle of 10° or greater to a drawing surface for the representation.

6. A method for producing a pattern-containing liquid, the method comprising

    a drawing step of drawing a representation by discharging a pattern-forming liquid material into a liquid using a position-controllable nozzle, wherein, in the drawing step, a first line is drawn and then a second line is drawn on a drawing surface apart from a drawing surface for the first line.

7. The method for producing a pattern-containing liquid according to claim 6, wherein the drawing surface for the first line and the drawing surface for the second line are apart from each other by a distance of 2 mm or greater.

8. A method for producing a pattern-containing liquid, the method comprising

    a drawing step of drawing a representation by discharging a pattern-forming liquid material into a liquid using a position-controllable nozzle, wherein, in the drawing step, a plurality of parallel adjacent lines is drawn to draw a planar representation.

9. A method for producing a pattern-containing liquid, the method comprising

    a drawing step of drawing a representation by discharging a pattern-forming liquid material into a liquid using a position-controllable nozzle,

wherein, in the drawing step, a dot or a line is drawn and the liquid material defining the dot or the line is extended with the nozzle to draw a planar representation.

10. A pattern-containing liquid comprising:

    a liquid; and
    a representation in the liquid, the representation being drawn using a pattern-forming liquid material,
    the representation including a first line drawn on a first drawing surface and a second line drawn on a drawing surface apart from the drawing surface.

11. A device for producing a pattern-containing liquid, the device comprising

    a controller configured to control:

        a position of a nozzle configured to discharge a pattern-forming liquid material; and
        a discharge flow rate of the liquid material discharged through the nozzle,

    the controller being configured to:

        cause the nozzle to discharge the liquid material into a liquid to draw a representation; and
        move the nozzle in a direction away from a drawing surface for the representation without discharging the liquid material through the nozzle to remove the nozzle from the representation.

12. A device for producing a pattern-containing liquid, the device comprising

    a controller configured to control:

        a position of a nozzle configured to discharge a pattern-forming liquid material; and
        a discharge flow rate of the liquid material discharged through the nozzle,

    the controller being configured to cause the nozzle to discharge the liquid material into a liquid with a tip portion of the nozzle remaining at an angle of 10° or greater to the drawing surface to draw a representation.

13. A device for producing a pattern-containing liquid, the device comprising

a controller configured to control:

> a position of a nozzle configured to discharge a pattern-forming liquid material; and
> a discharge flow rate of the liquid material discharged through the nozzle,

the controller being configured to:

> cause the nozzle to discharge the liquid material into a liquid to draw a first line; and
> cause the nozzle to discharge the liquid material into the liquid on a drawing surface apart from a drawing surface for the first line to draw a second line.

14. A device for producing a pattern-containing liquid, the device comprising

a controller configured to control:

> a position of a nozzle configured to discharge a pattern-forming liquid material; and
> a discharge flow rate of the liquid material discharged through the nozzle,

the controller being configured to cause the nozzle to discharge the liquid material into a liquid to draw a plurality of parallel adjacent lines and thereby draw a planar representation.

15. A device for producing a pattern-containing liquid, the device comprising

a controller configured to control:

> a position of a nozzle configured to discharge a pattern-forming liquid material; and
> a discharge flow rate of the liquid material discharged through the nozzle,

the controller being configured to:

> cause the nozzle to discharge the liquid material into a liquid to draw a dot or a line; and
> move the nozzle without discharging the liquid material through the nozzle to cause the nozzle to extend the liquid material defining the dot or the line and thereby draw a planar representation.

16. Software to be operated in a device for producing a pattern-containing liquid, the device including a controller configured to control:

a position of a nozzle configured to discharge a pattern-forming liquid material; and
a discharge flow rate of the liquid material discharged through the nozzle,
the software causing the controller to execute control processing comprising:

> causing the nozzle to discharge the liquid material into a liquid to draw a representation; and
> moving the nozzle in a direction away from a drawing surface for the representation without discharging the liquid material through the nozzle to remove the nozzle from the representation.

17. Software to be operated in a device for producing a pattern-containing liquid, the device including a controller configured to control:

> a position of a nozzle configured to discharge a pattern-forming liquid material; and
> a discharge flow rate of the liquid material discharged through the nozzle,
> the software causing the controller to execute control processing comprising:
> causing the nozzle to discharge the liquid material into a liquid with a tip portion of the nozzle remaining at an angle of 10° or greater to the drawing surface to draw a representation.

18. Software to be operated in a device for producing a pattern-containing liquid, the device including a controller configured to control:

> a position of a nozzle configured to discharge a pattern-forming liquid material; and
> a discharge flow rate of the liquid material discharged through the nozzle,
> the software causing the controller to execute control processing comprising:

> > causing the nozzle to discharge the liquid material into a liquid to draw a first line; and
> > causing the nozzle to discharge the liquid material into the liquid on a drawing surface apart from a drawing surface for the first line to draw a second line.

19. Software to be operated in a device for producing a pattern-containing liquid, the device including a controller configured to control:

> a position of a nozzle configured to discharge a pattern-forming liquid material; and
> a discharge flow rate of the liquid material discharged through the nozzle,
> the software causing the controller to execute control processing comprising:
causing the nozzle to discharge the liquid material into a liquid to draw a plurality of parallel adjacent lines and thereby draw a planar representation.

20. Software to be operated in a device for producing a pattern-containing liquid, the device including a controller configured to control:

a position of a nozzle configured to discharge a pattern-forming liquid material; and
a discharge flow rate of the liquid material discharged through the nozzle,
the software causing the controller to execute control processing comprising:

causing the nozzle to discharge the liquid material into a liquid to draw a dot or a line; and
moving the nozzle without discharging the liquid material through the nozzle to cause the nozzle to extend the liquid material defining the dot or the line and thereby draw a planar representation.

FIG.1A

FIG.1B

FIG.1C

FIG.1D

FIG.2A

FIG.2B

FIG.2C

FIG.3A

FIG.3B

FIG.3C

2Cb

1

3Ca

D≧2mm

FIG.3D

2Cb

3Cb

1

D≧2mm

FIG.3E

2Cb

3Cb

1

D≧2mm

FIG.3F

3Cb    3Ca

2Ca,2Cb

FIG.4A

2D

1

FIG.4B

2D

1

3Da

FIG.4C

2D   3Db

1

3Da

FIG.4D

FIG.4E

FIG.5A

2E

1

FIG.5B

2E

1

3Ea

FIG.5C

FIG.5D

EP 4 596 217 A1

FIG.6A

2F

1

FIG.6B

2F

1

3Fa

45

FIG.6C

2F

1

3Fa

FIG.6D

2F

1

3Fb

FIG.6E

FIG.7

FIG.8

FIG.9

FIG.10

## FIG.11

460

470

480

420

## FIG.12

Vertical movement

FIG.13

Perpendicular movement

FIG.14

Without removal

FIG.15

FIG.16

With removal

FIG.17

#3

#2

#4

#1

0〜30°

Nozzle

Drawing surface

## FIG.18

## FIG.19

FIG.20

FIG.21

#2    #1

First drawing surface

Second drawing surface

0〜3mm

FIG.22

FIG.23

#2     #1

First drawing surface

Second drawing surface

0〜3mm

FIG.24

FIG.25

FIG.26

FIG.27

FIG.28

FIG.29

FIG.30

FIG.31

T=0s  T=60s  T=160s

FIG.32A

FIG.32B

50 $\mu$ m

FIG.33

FIG.34

## INTERNATIONAL SEARCH REPORT

| International application No. |
|---|
| **PCT/JP2023/034186** |

| | |
|---|---|
| **A.** | **CLASSIFICATION OF SUBJECT MATTER** |

*B29C 64/112*(2017.01)i; *A23L 2/00*(2006.01)i; *A23L 2/58*(2006.01)i; *B29C 64/209*(2017.01)i; *B33Y 10/00*(2015.01)i;
*B33Y 30/00*(2015.01)i; *B33Y 50/02*(2015.01)i
FI:     B29C64/112; A23L2/00 W; A23L2/58; A23L2/00 M; B33Y10/00; B33Y30/00; B33Y50/02; B29C64/209

According to International Patent Classification (IPC) or to both national classification and IPC

| | |
|---|---|
| **B.** | **FIELDS SEARCHED** |

Minimum documentation searched (classification system followed by classification symbols)
    B29C64/112; A23L2/00; A23L2/58; B29C64/209; B33Y10/00; B33Y30/00; B33Y50/02

Documentation searched other than minimum documentation to the extent that such documents are included in the fields searched
    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | US 2020/0247053 A1 (UNIVERSITY COLLEGE DUBLIN, NATIONAL UNIVERSITY OF IRELAND, DUBLIN) 06 August 2020 (2020-08-06)<br>paragraphs [0026]-[0039], fig. 1-2 | 1-8, 10-14, 16-19 |
| A | WO 2019/197333 A1 (CELLINK AB) 17 October 2019 (2019-10-17)<br>entire text, all drawings | 1-20 |
| A | JP 2008-126459 A (KANAGAWA ACAD OF SCI & TECHNOL) 05 June 2008 (2008-06-05)<br>entire text, all drawings | 1-20 |
| A | JP 2021-522089 A (NEDERLANDSE ORGANISATIE VOOR TOEGEPAST-NATUURWETENSCHAPPELIJK ONDERZOEK TNO) 30 August 2021 (2021-08-30)<br>entire text, all drawings | 1-20 |
| A | JP 2019-136923 A (TORAY ENG CO LTD) 22 August 2019 (2019-08-22)<br>entire text, all drawings | 1-20 |

☐ Further documents are listed in the continuation of Box C.          ☑ See patent family annex.

| | |
|---|---|
| \*     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **15 November 2023** | **28 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/034186**

| Patent document cited in search report | | | Publication date (day/month/year) | Patent family member(s) | | | Publication date (day/month/year) |
|---|---|---|---|---|---|---|---|
| US | 2020/0247053 | A1 | 06 August 2020 | CN | 108367488 | A | |
| WO | 2019/197333 | A1 | 17 October 2019 | US | 2021/0031434 | A1 | |
| | | | | entire text, all drawings | | | |
| JP | 2008-126459 | A | 05 June 2008 | (Family: none) | | | |
| JP | 2021-522089 | A | 30 August 2021 | US | 2021/0078245 | A1 | |
| | | | | entire text, all drawings | | | |
| | | | | EP | 3564013 | A1 | |
| | | | | CN | 112368128 | A | |
| JP | 2019-136923 | A | 22 August 2019 | US | 2021/0268722 | A1 | |
| | | | | entire text, all drawings | | | |
| | | | | EP | 3750689 | A1 | |

Form PCT/ISA/210 (patent family annex) (January 2015)

**REFERENCES CITED IN THE DESCRIPTION**

**Patent documents cited in the description**

- US 2020247053 A1
- US 2018281295 A1

- WO 2018218264 A

**Non-patent literature cited in the description**

- *The bulletin of Hachinohe Institute of Technology,* 2007, vol. 26, 9-13